# EUROPEAN PATENT SPECIFICATION

(11) **EP 4 011 103 B1**
(45) Date of publication and mention of the grant of the patent: **18.03.2026**
(21) Application number: 20852116.1
(22) Date of filing: 10.06.2020
(51) Int. Cl.: H04W 8/18, H04W 8/20, H04W 60/00, H04W 76/12

(54) **METHOD AND APPARATUS FOR GROUP-BASED NETWORK MANAGEMENT**
VERFAHREN UND VORRICHTUNG ZUR GRUPPENBASIERTEN NETZWERKVERWALTUNG
PROCÉDÉ ET APPAREIL DE GESTION DE RÉSEAU À BASE DE GROUPES

(30) Priority: 09.08.2019 WO PCT/CN2019/100022
(43) Date of publication of application: 15.06.2022
(60) Divisional application: 25220645.3
(73) Proprietor: Telefonaktiebolaget LM Ericsson (publ), 164 83 Stockholm (SE)
(72) Inventor: LONG, Hongxia, Shanghai 200335 (CN)
(74) Representative: Ericsson
(86) International application number: PCT/CN2020/095410
(87) International publication number: WO 2021/027380

(56) References cited:
- EP-A1- 3 820 183
- CN-A- 109 922 472
- CN-A- 110 049 485
- US-A1- 2019 166 467
- US-A1- 2019 230 556
- SAMSUNG ET AL: "Provisioning of 5G LAN group configuration parameters", vol. SA WG2, no. Reno, USA; 20190513 - 20190517, 17 May 2019 (2019-05-17), pages 1 - 13, XP051736432, Retrieved from the Internet <URL:http://www.3gpp.org/ftp/Meetings%5F3GPP%5FSYNC/SA2/Docs/S2%2D1906681%2Ezip> [retrieved on 20190517]
- ERICSSON: "5G VN group management", vol. SA WG2, no. Reno, NV, USA; 20190513 - 20190517, 7 May 2019 (2019-05-07), XP051735459, Retrieved from the Internet <URL:http://www.3gpp.org/ftp/Meetings%5F3GPP%5FSYNC/SA2/Docs/S2%2D1905236%2Ezip> [retrieved on 20190507]
- ERICSSON: "Corrections to general 5G LAN description", vol. SA WG2, no. Sapporo, Japan; 20190624 - 20190628, 18 June 2019 (2019-06-18), pages 1 - 4, XP051751937, Retrieved from the Internet <URL:http://www.3gpp.org/ftp/tsg%5Fsa/WG2%5FArch/TSGS2%5F134%5FSapporo/Docs/S2%2D1906956%2Ezip> [retrieved on 20190618]
- "3rd Generation Partnership Project; Technical Specification Group Services and System Aspects; Procedures for the 5G System; Stage 2 (Release 16)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.1.0, 11 June 2019 (2019-06-11), pages 1 - 500, XP051753958
- SAMSUNG; ERICSSON; NOKIA; HUAWEI: "Provisioning of 5G LAN group configuration parameters", 3GPP DRAFT; S2-1906681 23.502 CR PROVISIOINING OF 5G LAN GROUP CONFIGURATION PARAMETERS - REV9, vol. SA WG2, 17 May 2019 (2019-05-17), Reno, USA, pages 1 - 13, XP051736432
- ERICSSON: "Corrections to general 5G LAN description", 3GPP DRAFT; S2-1906956_5GLAN_23501_GENERAL, vol. SA WG2, 18 June 2019 (2019-06-18), Sapporo, Japan, pages 1 - 4, XP051751937

## Description

### TECHNICAL FIELD

The present invention generally relates to the technical field of wireless communications, and specifically to a method, an apparatus and a computer program for group-based network management.

### BACKGROUND

This section introduces aspects that may facilitate a better understanding of the disclosure. Accordingly, the statements of this section are to be read in this light and are not to be understood as admissions about what is in the prior art or what is not in the prior art.

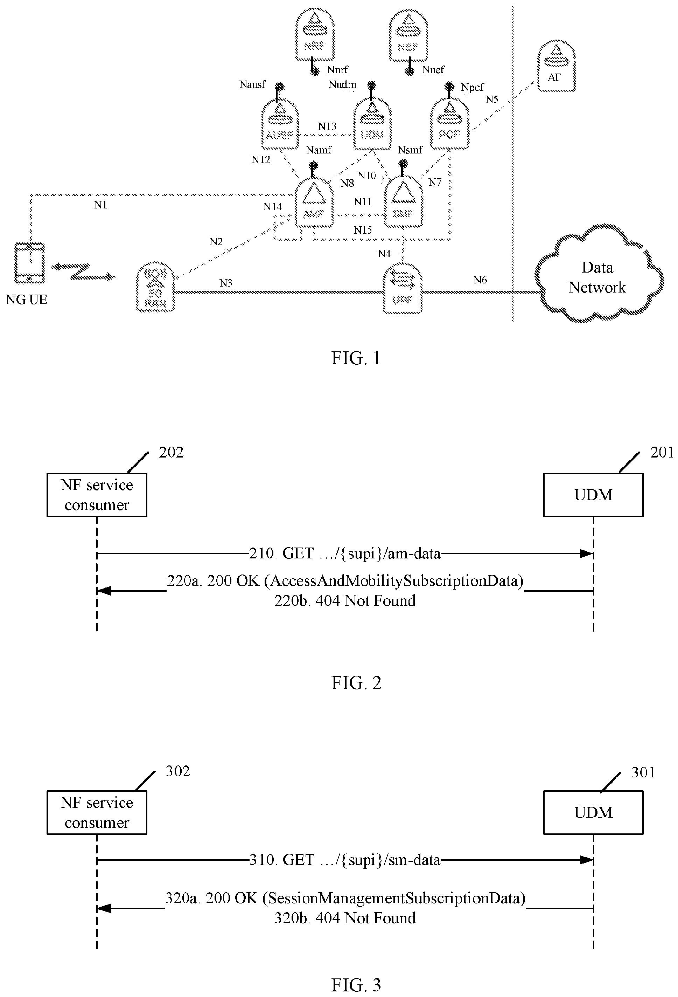

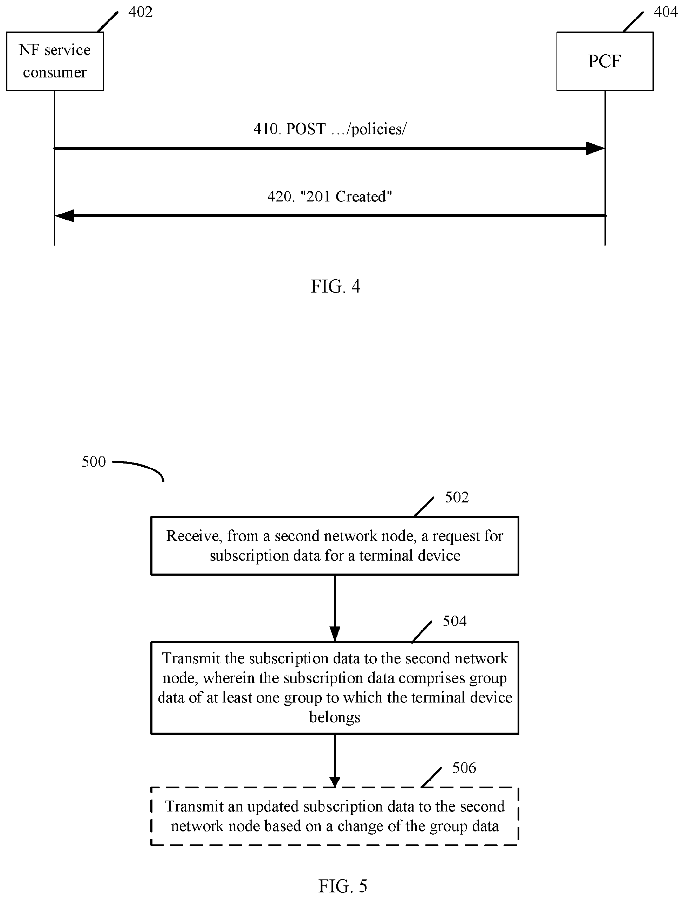

Currently core network architecture for next generation (5G) network has been proposed. The 5G core network employs service based architecture (SBA). FIG. 1 shows a high level architecture of 5G core network SBA. In the 5G core network SBA, conventional network elements in LTE network are replaced with network functions (NF). Each NF may provide many NF services. A NF may provide many NF services and a NF may request a certain NF service. In this case, the requesting NF may be referred to as "NF service consumer", and the NF providing the NF service may be referred to as "NF service producer". As shown in FIG. 1, 5G core network SBA may comprise AMF (Access and mobility Function), SMF (Session Management Function), AUSF (Authentication Service Function), UDM (Unified Data Management), PCF (Policy Control Function), AF (Application Function), NEF (Network Exposure Function), and NRF (NF Repository Function). The UDM offers services to the NF service consumers, e.g. AMF, SMF, NEF, AUSF and the like, as described in 3GPP TS 29.503 v16.0.0. The PCF provides UE policy control service to the NF service consumers, as described in 3GPP TS 29.525 v16.0.0.

5G expands the scope and reach of 3GPP-defined technologies. There may exist multiple market segments in the realm of residential, office, enterprise and factory. Within these market segments, it may be desirable to provide services with similar functionalities to Local Area Networks (LANs) and Virtual Private Networks (VPNs), but improved with 5G capabilities (e.g., high performance, long distance access, mobility and security).

Samsung et al. "Provisioning of 5G LAN group configuration parameters," S2-1906681, 3GPP TSG-SA WG2 Meeting #133, May 13-17, 2019, Reno, USA, proposes to add 5G VN group and 5G VN group membership management parameters to NEF service operations information flow.

Ericsson "5G VN group management," S2-1905236, 3GPP TSG-SA WG2 Meeting #133, May 13-17, 2019, Reno, USA, proposes that the management of the Group Identifier definition and Group membership list is managed via UDM based on extension of the External Parameter provision procedure.

Ericsson "Corrections to general 5G LAN description," S2-1906956, 3GPP TSG-SA WG2 Meeting #134, June 24-28 Sapporo, Japan, discloses that the NEF provides External Group ID to UDM.

### SUMMARY

Various embodiments of the present invention mainly aim at providing methods, apparatuses and computer programs for enabling group-based network management. Other features and advantages of embodiments of the present invention will also be understood from the following description of specific embodiments when read in conjunction with the accompanying drawings, which illustrate, by way of example, the principles of embodiments of the present invention. The invention is defined by the claims. Some preferred embodiments are specified by the dependent claims.

In a first aspect of the present invention, there is provided a method performed by a first network node configured to provide data management functionality, preferably being a Unified Data Management, UDM, as set forth in claim 1. The method comprises: receiving, from a second network node, a request for subscription data for a terminal device; and transmitting, the subscription data, to the second network node, wherein the subscription data comprises group data of at least one group to which the terminal device belongs; and wherein the method further comprises: prior to the transmitting of the subscription data comprising the group data, transmitting another subscription data comprising an identifier of the group data to the second network node.

In some embodiments, the request may comprise an indicator indicating a type of the subscription data. The subscription data may be obtained based on the indicator.

In some embodiments, the request may further comprise at least one of an identity of the terminal device and an identity of a Public Land Mobile Network, PLMN, that the terminal device is currently visiting.

In some embodiments, the group data may comprise at least one of the followings: allowed session types, accessible data network name, network slice information; and an application descriptor indicating an operating system and at least one application operating on the terminal device.

In some embodiments, the group data may be indexed by a group identifier of the at least one group.

In some embodiments, the method may further comprise transmitting a query for the subscription data to a third network node based on the request; and receiving the subscription data from the third network node.

In some embodiments, the method may further comprise transmitting an updated subscription data to the second network node based on a change of the group data.

In some embodiments, the method may further comprise receiving the updated subscription data from the third network node.

In some embodiments, the at least one group may comprise a 5G virtual network group.

In some embodiments, the first network node may be a unified data management, the second network node may be one of an access and mobility management function and a session management function, and the third network node may be a unified data repository.

In second aspect of the present invention, there is provided an apparatus in a first network node configured to provide data management functionality, preferably being a Unified Data Management, UDM, as set forth in claim 12. The apparatus comprises a processor and a memory coupled to the processor. The memory contains instructions which, when executed by the processor, cause the first network node to perform the method of the first aspect of the invention.

In a third aspect of the present invention, there is provided a computer-readable medium as set forth in claim 14. The computer-readable medium has computer program codes embodied thereon which, when executed on a computer in a first network node configured to provide data management functionality, preferably being a Unified Data Management, UDM, cause the first network node to perform the method of the first aspect of the invention.

According to the various aspects and embodiments as mentioned above, it can provide group-based network management. A group behavior of a terminal device can be managed based on group data.

### BRIEF DESCRIPTION OF THE DRAWINGS

The above and other aspects, features, and benefits of various embodiments of the present invention will become more fully apparent, by way of example, from the following detailed description with reference to the accompanying drawings, in which like reference numerals or letters are used to designate like or equivalent elements. The drawings are illustrated for facilitating better understanding of the embodiments of the invention and not necessarily drawn to scale, in which:
FIG. 1 illustrates a schematic 5G core network with SBA;
FIG. 2 illustrates a procedure for requesting access and mobility subscription data;
FIG. 3 illustrates a procedure for requesting session management subscription data;
FIG. 4 illustrates a procedure for create a policy association for a terminal device;
FIG. 5 illustrates a flowchart of a method implemented at a first network node according to some embodiments of the present invention;
FIG. 6 illustrates a flowchart of a method implemented at a second network node not according to the present invention;
FIG. 7 illustrates a flowchart of a method implemented at a fourth network node not according to the present invention;
FIG. 8 illustrates a flowchart of a method implemented at a third network node not according to the present disclosure;
FIG. 9 illustrates an exemplary procedure for provisioning of group data not according to the present invention;
FIG. 10 illustrates an exemplary procedure for access and mobility control according to some embodiments of the present invention;
FIG. 11 illustrates an exemplary procedure for session management according to some embodiments of the present invention;
FIG. 12 illustrates an exemplary procedure for controlling a policy for a terminal device not according to the present disclosure;
FIG. 13 illustrates an exemplary update procedure triggered by a change of group data not according to the present invention
FIG. 14 illustrates a block diagram of an apparatus in a first network node according to the present invention, a second network node, a third network node and a fourth network node, respectively;
FIG. 15 illustrates a block diagram of an apparatus in a first network node according to the present invention;
FIG. 16 illustrates a block diagram of an apparatus in a second network node not according to the present invention;
FIG. 17 illustrates a block diagram of an apparatus in a fourth network node not according to the present invention; and
FIG. 18 illustrates a block diagram of an apparatus in a third network node not according to the present invention.

### DETAILED DESCRIPTION

The embodiments of the present invention are described in detail with reference to the accompanying drawings. It should be understood that these embodiments are discussed for the purpose of enabling those skilled persons in the art to better understand and thus implement the present invention. Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Furthermore, the described features, advantages, and characteristics of the invention may be combined in any suitable manner in one or more embodiments, as long as they fall within the scope of the invention as defined by the claims. One skilled in the relevant art will recognize that the invention may be practiced without one or more of the specific features or advantages of a particular embodiment. In other instances, additional features and advantages may be recognized in certain embodiments that may not be present in all embodiments of the invention.

As used herein, the term "communication network" refers to a network following any suitable communication standards, such as new radio (NR), long term evolution (LTE), LTE-Advanced, wideband code division multiple access (WCDMA), high-speed packet access (HSPA), and so on. Furthermore, the communications between a terminal device and a network node in the communication network may be performed according to any suitable generation communication protocols, including, but not limited to, the first generation (1G), the second generation (2G), 2.5G, 2.75G, the third generation (3G), 4G, 4.5G, 5G communication protocols, and/or any other protocols either currently known or to be developed in the future.

The term "terminal device" refers to any end device that can access a communication network and receive services therefrom. By way of example and not limitation, the terminal device may refer to a user equipment (UE), or other suitable devices. The UE may be, for example, a subscriber station, a portable subscriber station, a mobile station (MS) or an access terminal (AT). The terminal device may include, but not limited to, portable computers, image capture terminal devices such as digital cameras, gaming terminal devices, music storage and playback appliances, a mobile phone, a cellular phone, a smart phone, a tablet, a wearable device, a personal digital assistant (PDA), a vehicle, and the like.

As yet another specific example, in an Internet of things (IoT) scenario, a terminal device may also be called an IoT device and represent a machine or other device that performs monitoring, sensing and/or measurements etc., and transmits the results of such monitoring, sensing and/or measurements etc. to another terminal device and/or a network equipment. The terminal device may in this case be a machine-to-machine (M2M) device, which may in a 3rd generation partnership project (3GPP) context be referred to as a machine-type communication (MTC) device.

As one particular example, the terminal device may be a UE implementing the 3GPP narrow band Internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a terminal device may represent a vehicle or other equipment, for example, a medical instrument that is capable of monitoring, sensing and/or reporting etc. on its operational status or other functions associated with its operation.

As used herein, the terms "first", "second" and so forth refer to different elements. The singular forms "a" and "an" are intended to include the plural forms as well, unless the context clearly indicates otherwise. The terms "comprises", "comprising", "has", "having", "includes" and/or "including" as used herein, specify the presence of stated features, elements, and/or components and the like, but do not preclude the presence or addition of one or more other features, elements, components and/or combinations thereof. The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

In the following description and claims, unless defined otherwise, all technical and scientific terms used herein have the same meaning as commonly understood by one of ordinary skills in the art to which this disclosure belongs. For example, the term "terminal device" used herein may refer to any terminal device or user equipment (UE) having wireless communication capabilities, including but not limited to, mobile phones, cellular phones, smart phones, or personal digital assistants (PDAs), portable computers, image capture devices such as digital cameras, gaming devices, music storage and playback appliances, wearable devices, vehicle-mounted wireless device and the like. In the following description, the terms "terminal device", "user equipment" and "UE" may be used interchangeably. Similarly, the term "network node" may represent any NF in 5G core network.

As discussed above, a UDM offers services to NF consumers (e.g. AMF, SMF, NEF, AUSF and the like. FIG. 2 shows a scenario where a NF service consumer sends a request to the UDM for a UE's access and mobility subscription data. As shown at step 210, a NF service consumer 202 (e.g. AMF) sends a GET request to the UDM 201 for resource representing the UE's access and mobility subscription data. For example, the request may be sent by an AMF in a registration procedure of a UE, as specified in 3GPP TS 23.502 v16.1.1. The request contains the UE's identity (e.g. Subscriber Permanent Identifier (SUPI) indicated with "supi"), the type of the requested information (e.g. "am-data"), and query parameters indicating the supported features and/or an identifier of a currently visiting Public Land Mobile Network (PLMN). On success, the UDM 201 responds with "200 OK" with a message body containing the UE's access and mobility subscription data, as shown at step 220a. On failure, HTTP status code "404 Not Found" shall be returned, and additional error information should be returned in a GET response body, as shown at step 220b.

The data returned (AccessAndMobilitySubscriptionData) in step 220a is defined as in Table 1.

**Table 1: Definition of type AccessAndMobilitySubscriptionData (as defined in 3GPP TS 29.503 v16.0.0)**

| **Attribute name** | **Data type** | **P** | **Cardinality** | **Description** |
|---|---|---|---|---|
| supportedFeatures | SupportedFeatures | O | 0..1 | See clause 6.1.8 |
| gpsis | array(Gpsi) | O | 0..N | List of Generic Public Subscription Identifier; see 3GPP TS 29.571 [7] |
| internalGroupIds | array(GroupId) | O | 1..N | List of internal group identifier; see 3GPP TS 23.501 [2] clause 5.9.7 |
| subscribedUeAmbr | AmbrRm | O | 0..1 | |
| nssai | Nssai | O | 0..1 | Network Slice Selection Assistance Information |
| ratRestrictions | array(RatType) | O | 0..N | List of RAT Types that are restricted; see 3GPP TS 29.571 [7] |
| forbiddenAreas | array(Area) | O | 0..N | List of forbidden areas |
| serviceAreaRestriction | ServiceAreaRestric tion | O | 0..1 | Subscribed Service Area Restriction |
| coreNetworkTypeRestric tions | array (CoreNetwork Type) | O | 0..N | List of Core Network Types that are restricted |
| rfspIndex | RfspIndexRm | O | 0..1 | Index to RAT/Frequency Selection Priority; |
| subsRegTimer | DurationSecRm | O | 0..1 | Subscribed periodic registration timer; see 3GPP TS 29.571 [7] |
| ueUsageType | UeUsageType | O | 0..1 | |
| mpsPriority | MpsPriorityIndicat or | O | 0..1 | |
| mcsPriority | McsPriorityIndicat or | O | 0..1 | |
| activeTime | DurationSecRm | O | 0..1 | subscribed active time for PSM UEs |
| dlPacketCount | DlPacketCount | O | 0..1 | DL Buffering Suggested Packet Count indicates whether extended buffering of downlink packets for High Latency Communication is requested. |
| sorInfo | SorInfo | O | 0..1 | On Nudm, this IE shall be present if the UDM shall send the information for Steering of Roaming during registration or the subscription data update to the UE. The UDM may detect the need to send sorInfo by retrieving context information from the UDR. |
| upuInfo | UpuInfo | O | 0..1 | This IE shall be present if the UDM shall send the information for UE Parameters Update after the UE has been successfully authenticated and registered to the 5G system. |
| micoAllowed | MicoAllowed | O | 0..1 | Indicates whether the UE subscription allows MICO mode. |
| sharedAmDataIds | array(SharedDataId ) | O | 0..N | Identifier of shared Access And Mobility Subscription data |
| odbPacketServices | OdbPacketServices | O | 0..1 | Operator Determined Barring for Packet Oriented Services |
| subscribedDnnList | array(Dnn) | O | 0..N | List of the subscribed DNNs for the UE. Used to determine the list of LADN available to the UE as defined in clause 5.6.5 of TS 23.501 [2]. |
| serviceGapTime | DurationSec | O | 0..1 | Used to set the Service Gap timer for Service Gap Control (see TS 23.501 [2] clause 5.26.16 and TS 23.502 [3] clause 4.2.2.2.2). |
| traceData | TraceData | O | 0..1 | Trace requirements about the UE, only sent to AMF in the HPLMN or one of its equivalent PLMN(s) |
| NOTE: AccessAndMobilitySubscriptionData can be UE-individual data or shared data. | | | | |
| UE-individual data take precedence over shared data. | | | | |
| E.g.: When an attribute of type array is present but empty within UE-Individual data and present (with any cardinality) in shared data, the empty array takes precedence. Similarly, when a nullable attribute is present with value null within the individual data and present (with any value) in shared data, the null value takes precedence (i.e. for the concerned UE the attribute is considered absent). | | | | |

FIG. 3 shows a scenario where a NF service consumer sends a request to a UDM for a UE's session management subscription data. As shown at step 310, a NF service consumer 302 (e.g. SMF) sends a GET request to the UDM 301 for a UE's session management subscription data. For example, the request may be sent by a SMF in a procedure of a UE-requested PDU (Protocol Data Unit) session establishment for non-roaming and roaming with local breakout, as specified in 3GPP TS 23.502 v16.1.1. The request contains the UE's identity (e.g. Subscriber Permanent Identifier (SUPI)), the type of the requested information (e.g. "sm-data"), and query parameters indicating the supported features and/or an identifier of a currently visiting Public Land Mobile Network (PLMN). On success, the UDM 301 responds with "200 OK" with a message body containing the UE's session management subscription data, as shown at step 320a. On failure, HTTP status code "404 Not Found" shall be returned, and additional error information should be returned in a GET response body, as shown at step 320b.

The data (SessionManagementSubscriptionData) returned in step 320a is defined as in Table 2.

**Table 2: Definition of type SessionManagementSubscriptionData (as defined in 3GPP TS 29.503 v 16.0.0)**

| **Attribute name** | **Data type** | **P** | **Cardinality** | **Description** |
|---|---|---|---|---|
| singleNssai | Snssai | M | 1 | A single Network Slice Selection Assistance Information |
| dnnConfigurations | map(DnnConfiguration ) | O | 0..N | Additional DNN configurations for the network slice; |
| | | | | A map (list of key-value pairs where dnn serves as key; see clause 6.1.6.1) of DnnConfigurations. |
| internalGroupIds | array(GroupId) | O | 1..N | List of internal group identifier; see 3GPP TS 23.501 [2] clause 5.9.7 |
| traceData | TraceData | O | 0..1 | Trace requirements about the UE, only sent to SMF in the HPLMN or one of its equivalent PLMN(s) |
| sharedDnnConfigurationsI d | SharedDataId | O | 0..1 | Identifier of shared data for DNN configuration. |
| sharedTraceDataId | SharedDataId | O | 0..1 | Identifier of shared data for trace requirements |
| odbPacketServices | OdbPacketServices | O | 0..1 | Operator Determined Barring for Packet Oriented Services |
| NOTE: A single UE-individual dnnConfiguration (within dnnConfigurations) may clash with a shared dnnConfiguration (i.e. both have the same dnn value as key). In this case the UE-individual dnnConfiguration takes precedence. | | | | |

The PCF provides UE policy control service to NF consumers. FIG. 4 illustrates a procudure for a creation of a policy association. For example, the procedure is applicable when a NF service consumer (e.g. AMF) creates a UE policy association when the UE registers to the network, and when the the AMF is relocated (between the different AMF sets) and the new AMF selects a new PCF. The creation of an UE policy association only applies for normally registered UEs, i.e., it does not apply for emergency-registered UEs. In an example, when a UE registers and a UE context is being established, the AMF can obtain from the UE an "UE STATE INDICATION" message of the UE policy delivery protocol (as defined in Annex D of 3GPP TS 24.501 v16.1.0), and shall decide based on local policies and that message whether to establish a UE policy association with the PCF. To establish a UE policy association with the PCF, the NF service consumer 402 (e.g. AMF) sends an HTTP POST request to PCF 401, as shown at step 410. The request comprises parameters and indicators "{apiRoot}/npcf-ue-policy-control/v1/policies/" as Resource URI. A PolicyAssociationRequest data structure, which is a request body of the request, includes Notification URI encoded as "notificationUri" attribute; and SUPI encoded as "supi" attribute. The request body may further comprise the following parameters when available:
- GPSI encoded as "gpsi" attribute;
- Access type encoded as "accessType" attribute;
- Permanent Equipment Identifier (PEI) encoded as "pei" attribute;
- User Location Information encoded as "userLoc" attribute;
- UE Time Zone encoded as "timeZone" attribute;
- Serving PLMN Identifier encoded as "servingPlmn" attribute;
- RAT type encoded as "ratType" attribute;
- any received "UE STATE INDICATION" message of the UE policy delivery protocol defined in Annex D of 3GPP TS 24.501 encoded as "uePolReq" attribute;
- H-PCF ID (if the consumer is V-PCF, when receiving the H-PCF ID from AMF) encoded as "hPcfId" attribute;
- Internal Group Identifier(s) encoded as "groupIds" attribute;
- if the NF service consumer is an AMF, the GUAMI encoded as "guami" attribute;
- if the NF service consumer is an AMF, the name of a service produced by the AMF that expects to receive information within Npcf_UEPolicyControl_UpdateNotify service operation encoded as "serviceName" attribute;
- Alternate or backup IPv4 Address(es) where to send Notifications encoded as "altNotifIpv4Addrs" attribute;
- Alternate or backup IPv6 Address(es) where to send Notifications encoded as "altNotifIpv6Addrs" attribute; and
- Serving AMF Id encoded in the "servingNfld" attribute.

Upon the receiption of the HTTP POST request, the PCF 401 assigns a UE policy association ID. If success, the PCF 401 sends a HTTP "201 Created" response with the URI for the created resource in the "Location" header field, as shown at 420.

As mentioned above, within a market segment, it may be desirable to provide services with similar functionalities to Local Area Networks (LANs) and Virtual Private Networks (VPNs), but improved with 5G capabilities. A set of terminal devices sharing such services can constitute a group. For example, terminal devices in a 5G Virtual Network (VN) group may use private communication for 5G LAN-type services.

Based on the above descriptions for existing management of NF services and policy control, following problems can be identified for group-based network management:
**Problem 1**: In the access and mobility subscription data defined in Table 1, an attribute "internalGroupIds" could be used to indicate the groups to which a UE belongs. However, the access and mobility subscription data does not include any group data for those 5G VN groups, such as parameters indicating subscriptions for the groups. So once the AMF 202 gets the access and mobility subscription data, it still can't enforce 5G VN group-based control regards to access and mobility control for the 5G VN group. The worst case may be that, access and mobility behaviors of a member (e.g. UE) of a 5G VN group are not consistent with other members of the group.
**Problem 2:** In the session management subscription data defined in Table 2, an attribute "internalGroupIds" could be used to indicate the groups to which a UE belongs. But the session management subscription data does not include any group data for those 5G VN groups, such as parameters indicating subscriptions for the groups. So, once the SMF 302 gets the session management subscription data, it still can't enforce 5G VN group-based control regards to PDU session management for the 5G VN group. The worst case may be that, PDU session behavior of a member (e.g. UE) of a 5G VN group are not consistent with other members of the group.
**Problem 3**: In the UE policy association request, an attribute "groupIds" could be used to indicate the groups to which a UE belongs. But, no 5G VN group data for those groups is queried to build the UE policy. So, once an AMF gets the UE policy data, it still can't enforce 5G VN group-based control regards to UE policy for the 5G VN group. The worst case is that a member of a 5G VN group does not behaved consistently as other members of the group.

Therefore it is desirable to provide a new mechanism for facilitating group-based network management, to overcome the above mentioned problems.

In the present disclosure, methods, apparatuses and computer program products are provided to facilitating group-based network management in the wireless communication network. Though embodiments of the present invention can be implemented in the exemplary 5G core network shown in FIG. 1, it would be appreciated that embodiments of the invention are not limited to such a core network. For illustrative purposes, several embodiments of the present invention will be described in the context of network management based on a 5G VN group. Those skilled in the art will appreciate, however, that the concept and principle of the several embodiments of the present invention may be more generally applicable to network management based on other kinds of group.

It is noted that some embodiments of the present invention are mainly described in relation to 5G specifications being used as non-limiting examples for certain exemplary network configurations and system deployments. As such, the description of exemplary embodiments given herein specifically refers to terminology which is directly related thereto. Such terminology is only used in the context of the presented non-limiting examples and embodiments, and does not limit the present invention naturally in any way. Rather, any other system configuration or radio technologies may equally be utilized as long as exemplary embodiments described herein are applicable.

Reference is now made to FIG. 5, which shows a flowchart of a method 500 according to some embodiments of the present invention. The method 500 is implemented at a first network node (e.g., data management functionality, like the UDM shown in FIG. 1). As shown in FIG. 5, the method 500 comprises: receiving, from a second network node, a request for subscription data for a terminal device at block 502; and transmitting the subscription data to the second network node at block 504. The subscription data comprises group data of at least one group to which the terminal device belongs.

In some embodiments, the request may comprise an indicator indicating a type of the subscription data. In an example, the indicator may be encoded as an attribute "am-data" to indicate access and mobility subscription data. In another example, the indicator may be encoded as an attribute "sm-data" to indicate session management subscription data. The subscription data may be obtained based on the indicator.

In some embodiments, the request may comprise a subscriber identifier of the terminal device. For example, the identifier may be a Subscriber Permanent Identifier (SUPI) allocated to the terminal device. Alternatively or additionally, the request may comprise an identity of a Public Land Mobile Network (PLMN) that the terminal device is currently visiting.

In some embodiments, the group data comprise at least one of the followings: allowed session types; accessible data network name; network slice information; and an application descriptor indicating an operating system (OS) and at least one application operating on the terminal device. In an example, there are a plurality of accessible data network names contained in the group data. It means that a plurality of data networks are accessible for one group. The group data is indexed by a group identifier of the at least one group.

According to the claimed invention, the UDM further transmits, prior to the transmitting of the subscription data comprising the group data, another subscription data comprising an identifier of the group data to the second network node. In that case, the group data can be transmitted to the second network later based on the identifiers of the group data.

In some embodiments, the UDM may store the subscription data in local memory. In other embodiments, the subscription data may be stored information externally in a third network node, e.g. in a UDR. In this case, the UDM may obtain the required subscription data from the UDR. In an example, the UDM may transmit a query for the subscription data to the third network node based on the request, and then receive the subscription data from the third network node. In another example, the UDM may retrieve the required subscription data from the UDR and store them locally before processing an incoming request. After processing the incoming request, the UDM may delete the locally stored subscription data.

In some examples, the UDM may transmit an updated subscription data to the second network node based on a change of the group data, at block 506. The request from the second network node for the subscription data may comprise information which requires the updated subscription data upon the change of the group data. Alternatively, the second network node may subscribe to notifications of group data change at the UDM through another separate request. As discussed above, in the case that the subscription data is stored externally at the UDR, the UDM may subscribe to notifications of group data change at the UDR, and receives the updated subscription data from the UDR accordingly.

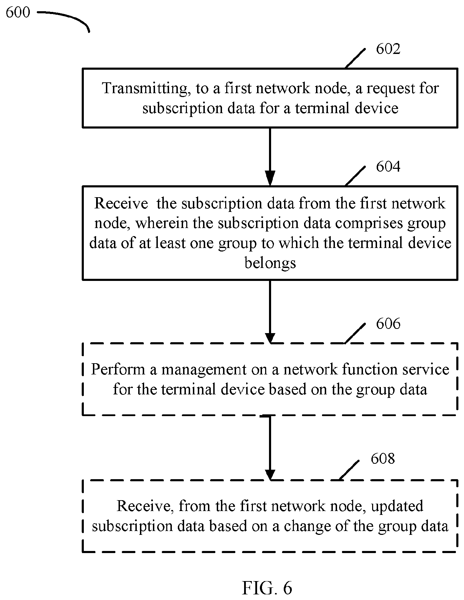

Reference is now made to FIG. 6, which shows a flowchart of a method 600 that may be implemented at a second network node (e.g., a NF service consumer like the AMF or SMF shown in FIG. 1).

As shown in FIG. 6, the method 600 may comprise: transmitting a request for subscription data for a terminal device to a first network node, at block 602; and receiving the subscription data from the first network node at block 604, wherein the subscription data comprises group data of at least one group to which the terminal device belongs.

As described above, the request may comprise an indicator indicating the type of the subscription data. Optionally, the request may further comprise at least one of an identity of the terminal device and an identity of a PLMN that the terminal device is currently visiting.

In some examples, the method may further comprise performing a management on a network function service for the terminal device based on the group data at 606. In an example where the second network node is an AMF, the AMF may enforce access and mobility management for the terminal device based on the acquired group data. In another example where the second network node is an SMF, the SMF may enforce session management for the terminal device based on the acquired group data.

In some examples, the method may further comprise receiving, from the first network node, updated subscription data based on a change of the group data. The request may further comprise information which requires the updated subscription data upon the change of the group data.

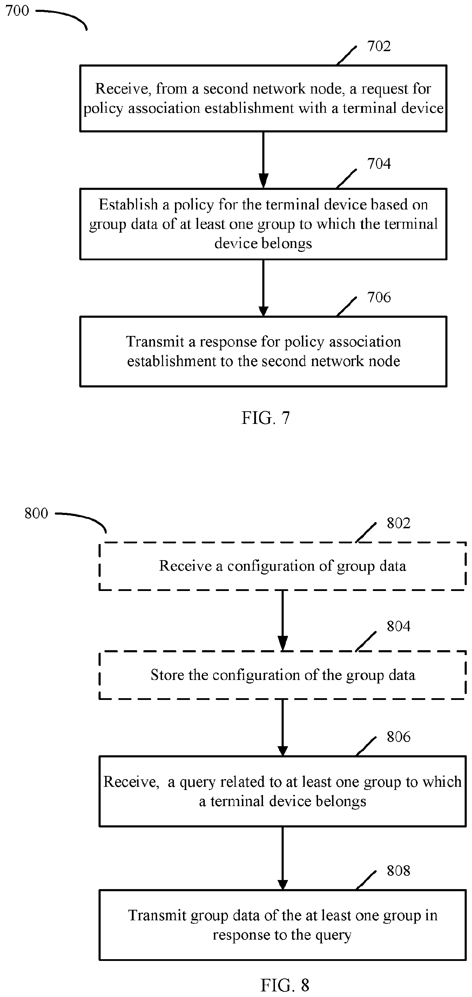

Reference is now made to FIG. 7, which shows a flowchart of a method 700 that may be implemented at a fourth network node (e.g., a PCF shown in FIG. 1).

As shown in FIG. 7, the method 700 may comprise: receiving, from a second network node, a request for policy association establishment with a terminal device at block 702; establishing a policy for the terminal device based on group data of at least one group to which the terminal device belongs at 704; and transmitting 706 a response for policy association establishment to the second network node.

In some examples, the method may further comprise transmitting a query for the group data to a third network node based on the request for policy association establishment, and receiving the group data from a third network node. In an example, the third network node is a UDR.

In some examples, the method may further comprise, receiving, from the third network node, updated group data based on a change of the group data; establishing an updated policy for the terminal device based on the updated group data; and transmitting the updated policy to the second network node.

Reference is now made to FIG. 8, which shows a flowchart of a method 800 that may be implemented at a third network node (e.g., a UDR shown in FIG. 1).

As shown in FIG. 8, the method 800 may comprise: receiving a query related to at least one group to which a terminal device belongs at 806; and transmitting group data of the at least one group in response to the query at 808.

In some examples, the query may be received from a UDM for subscription data for the terminal device. The group data may be transmitted within the subscription data for the terminal device.

In some other examples, the query may be received from a policy control function for group data to be utilized for policy association establishment with the terminal device.

In some examples, the method may further comprise receiving a configuration of the group data at block 802; and storing the configuration of the group data at block 804. In some examples, the method may further comprise transmitting an updated group data to the policy control function based on a change of the group data.

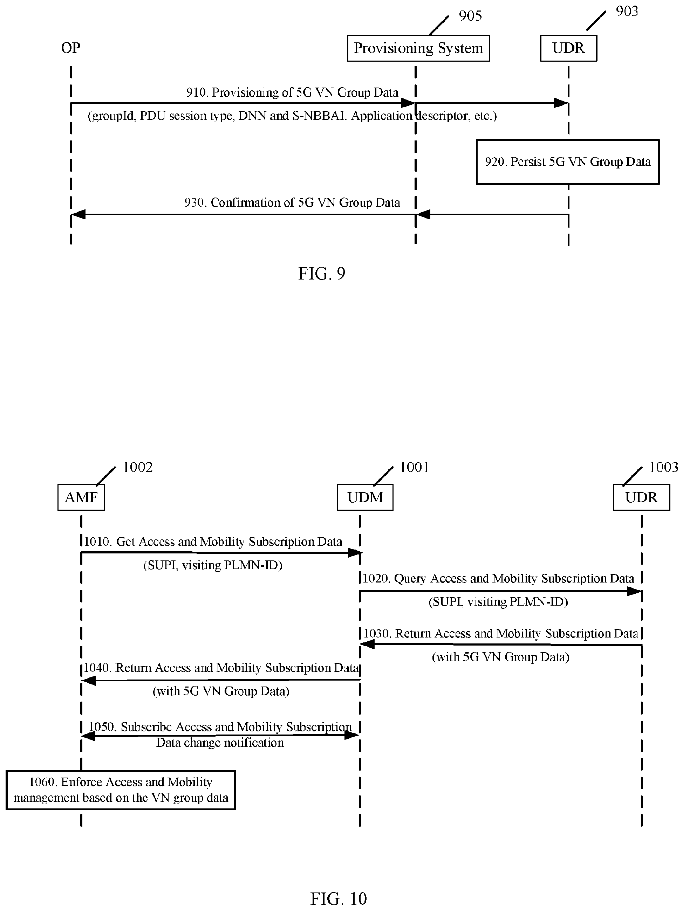

FIG. 9 depicts the provisioning flow for configuration of the 5G VN group subscription data. At step 910, an operator (e.g. an administrator) provisions the 5G VN group subscription data into a UDR 903 through a provisioning system 905. For example, the provisioning system may be an operation support system, a service provisioning system, and the like. In some other examples, UDR 903 may receive configurations of the subscription data from other network nodes, such as NEF as shown in FIG. 1.

The 5G VN group data can be indexed by an identifier "groupId" of respective group. In an example, the group data may comprise PDU session type, DNN, S-NSSAI, Application descriptor etc.

At step 920, the UDR persists the 5G VN group data into a database. For containing 5G VN group data, two new data types (as shown in Table 3-1, Table 3-2 and Table 4) can be defined as below. Table 3-1 is for the case where only 1:1 mapping between DNN and 5G VN Group is supported. Table 3-2 is for the case where a n:1 mapping of DNN and 5G VN Group is supported.

### Type1: VnGroupData

**Table 3-1: Definition of type VnGroupData**

| **Attribute name** | **Data type** | **P** | **Cardinality** | **Description** |
|---|---|---|---|---|
| pduSessionTypes | PduSessionTypes | O | 0..1 | Allowed session types |
| dnn | Dnn | O | 0..1 | Data Network Name (NOTE) |
| singleNssai | Snssai | O | 0..1 | Single Nssai |
| appDescriptor | AppDescriptor | O | 0..1 | List of Application Descriptors |
| NOTE: Only a 1:1 mapping between DNN and 5G VN group is supported | | | | |

**Table 3-2: Definition of type VnGroupData**

| **Attribute name** | **Data type** | **P** | **Cardinality** | **Description** |
|---|---|---|---|---|
| pduSessionTypes | PduSessionTypes | O | 0..1 | Allowed session types |
| dnn | array(Dnn) | O | 0..N | Data Network Name (NOTE) |
| singleNssai | Snssai | O | 0..1 | Single Nssai |
| appDescriptor | AppDescriptor | O | 0..1 | List of Application Descriptors |
| NOTE: A n:1 mapping between DNN and 5G VN group is supported in this release | | | | |

### Type: AppDescriptor

**Table 4: Definition of type AppDescriptor**

| **Attribute name** | **Data type** | **P** | **Cardinality** | **Description** |
|---|---|---|---|---|
| osId | string | O | 0..1 | OS identifier, does not include an OS version number |
| osAppIdList | array (string) | O | 0..N | List of OS application identifier, does not include a version number for the application |

At step 930, the result of the provisioning can be feedback to the operator through the provisioning system as a confirmation.

FIG. 10 illustrates an exemplary procedure for access and mobility control according to an embodiment of the present invention. In this example, it takes UDM as an example of the first network node, AMF as an example of the second network node, and UDR as an example of the third network node. The UDM 1001 provides access and mobility subscription data to AMF 1002 with 5G VN group data, so the AMF 1002 could base on the VN group data to enforce access and mobility control for users belongs to the 5G VN group.

As shown in FIG. 10, at step 1010, the AMF 1002 gets access and mobility subscription data for a terminal device from the UDM 1001. The input parameter may base on an identity of a terminal device, such as SUPI, and a visiting PLMN-ID. At step 1020, the UDM 1001 may query access and mobility subscription data from the UDR 1003. In response, the UDR 1003 may get the access and mobility subscription data from a database and return the data to the UDM 1001, at step 1030.

If the terminal device is a member of a 5G VN Group, the UDM 1001 retrieves UE subscription data and corresponding 5G VN group data from the UDR 1003. The UDR 1003 adds the 5G VN Group data in the access and mobility subscription data for the VN groups to which the terminal device belongs. Then, the UDM 1001 provides the access and mobility UE subscription data to the AMF 1002, in step 1040. The corresponding 5G VN group data can be included in the access and mobility subscription data and provided to the AMF 1002.

According to some embodiments, the group data can be encoded into an attribute "vnGroupInfo" in the access and mobility UE subscription data, as shown in the following Table 5. In some embodiments, the UDM 100 transmits, prior to the transmitting of the group data, another access and mobility UE subscription data which comprises an identifier of the group data to the second network node. The identifier of the group data can be encoded into an attribute "sharedVnGroupDataId" in the access and mobility UE subscription data, as shown in the following Table 5. In an example, the AMF 1002 may determine whether or not the group data is necessary based on the identifier of the group data. If necessary, the AMF 1002 may query the group data from the UDM 1001 by using the identifier of the group data as an index.

For example, Table 1 can be updated into Table 5 with new attributes for 5G VN Group data in the access and mobility subscription data.

**Table 5: Updated Definition of type AccessAndMobilitySubscriptionData (update highlighted)**

| **Attribute name** | **Data type** | **P** | **Cardinality** | **Description** |
|---|---|---|---|---|
| supportedFeatures | SupportedFeatures | O | 0..1 | See clause 6.1.8 |
| gpsis | array(Gpsi) | O | 0..N | List of Generic Public Subscription Identifier; see 3GPP TS 29.571 [7] |
| internalGroupIds | array(GroupId) | O | 1..N | List of internal group identifier; see 3GPP TS 23.501 [2] clause 5.9.7 |
| vnGroupInfo | map(VnGroupData ) | O | 0..N | A map of 5G VN group data (GroupId serves as key) |
| sharedVnGroupDataIds | map(SharedDataId) | O | 0..N | A map of identifiers of shared 5G VN group data (GroupId serves as key), only present if vnGroupInfo not present |
| subscribedUeAmbr | AmbrRm | O | 0..1 | |
| nssai | Nssai | O | 0..1 | Network Slice Selection Assistance Information |
| ratRestrictions | array(RatType) | O | 0..N | List of RAT Types that are restricted; see 3GPP TS 29.571 [7] |
| forbiddenAreas | array(Area) | O | 0..N | List of forbidden areas |
| serviceAreaRestriction | ServiceAreaRestric tion | O | 0..1 | Subscribed Service Area Restriction |
| coreNetworkTypeRestric tions | array(CoreNetwork Type) | O | 0..N | List of Core Network Types that are restricted |
| rfspIndex | RfspIndexRm | O | 0..1 | Index to RAT/Frequency Selection Priority; |
| subsRegTimer | DurationSecRm | O | 0..1 | Subscribed periodic registration timer; see 3GPP TS 29.571 [7] |
| ueUsageType | UeUsageType | O | 0..1 | |
| mpsPriority | MpsPriorityIndicat or | O | 0..1 | |
| mcsPriority | McsPriorityIndicat or | O | 0..1 | |
| activeTime | DurationSecRm | O | 0..1 | subscribed active time for PSM UEs |
| dlPacketCount | DlPacketCount | O | 0..1 | DL Buffering Suggested Packet Count indicates whether extended buffering of downlink packets for High Latency Communication is requested. |
| sorInfo | SorInfo | O | 0..1 | On Nudm, this IE shall be present if the UDM shall send the information for Steering of Roaming during registration or the subscription data update to the UE. The UDM may detect the need to send sorInfo by retrieving context information from the UDR. |
| upuInfo | UpuInfo | O | 0..1 | This IE shall be present if the UDM shall send the information for UE Parameters Update after the UE has been successfully authenticated and registered to the 5G system. |
| micoAllowed | MicoAllowed | O | 0..1 | Indicates whether the UE subscription allows MICO mode. |
| sharedAmDataIds | array(SharedDataId ) | O | 0..N | Identifier of shared Access And Mobility Subscription data |
| odbPacketServices | OdbPacketServices | O | 0..1 | Operator Determined Barring for Packet Oriented Services |
| subscribedDnnList | array(Dnn) | O | 0..N | List of the subscribed DNNs for the UE. Used to determine the list of LADN available to the UE as defined in clause 5.6.5 of TS 23.501 [2]. |
| serviceGapTime | DurationSec | O | 0..1 | Used to set the Service Gap timer for Service Gap Control (see TS 23.501 [2] clause 5.26.16 and TS 23.502 [3] clause 4.2.2.2.2). |
| traceData | TraceData | O | 0..1 | Trace requirements about the UE, only sent to AMF in the HPLMN or one of its equivalent PLMN(s) |
| NOTE: AccessAndMobilitySubscriptionData can be UE-individual data or shared data. | | | | |
| UE-individual data take precedence over shared data. | | | | |
| E.g.: When an attribute of type array is present but empty within UE-Individual data and present (with any cardinality) in shared data, the empty array takes precedence. Similarly, when a nullable attribute is present with value null within the individual data and present (with any value) in shared data, the null value takes precedence (i.e. for the concerned UE the attribute is considered absent). | | | | |

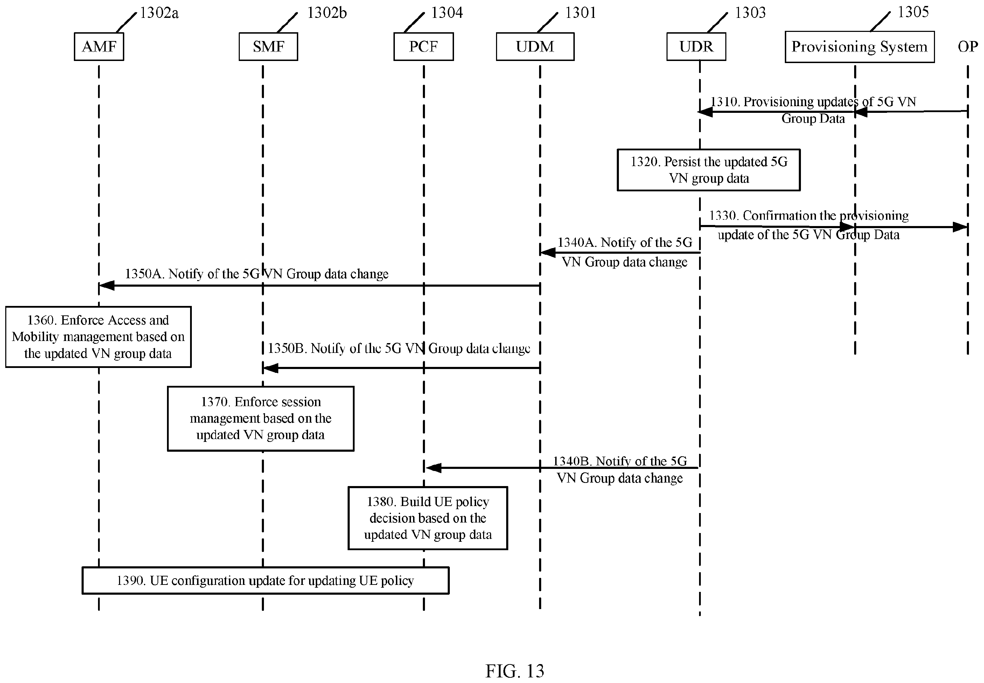

At step 1050, the AMF 1002 may subscribe a change notification of access and mobility subscription data from the UDM 1001. Then, once related subscription data changed, it will get notified of the changed data as described in FIG. 13.

At step 1060, the AMF 1002 may enforce the access and mobility management for the terminal device, based on the 5G VN group data of at least one group to which the terminal device belongs.

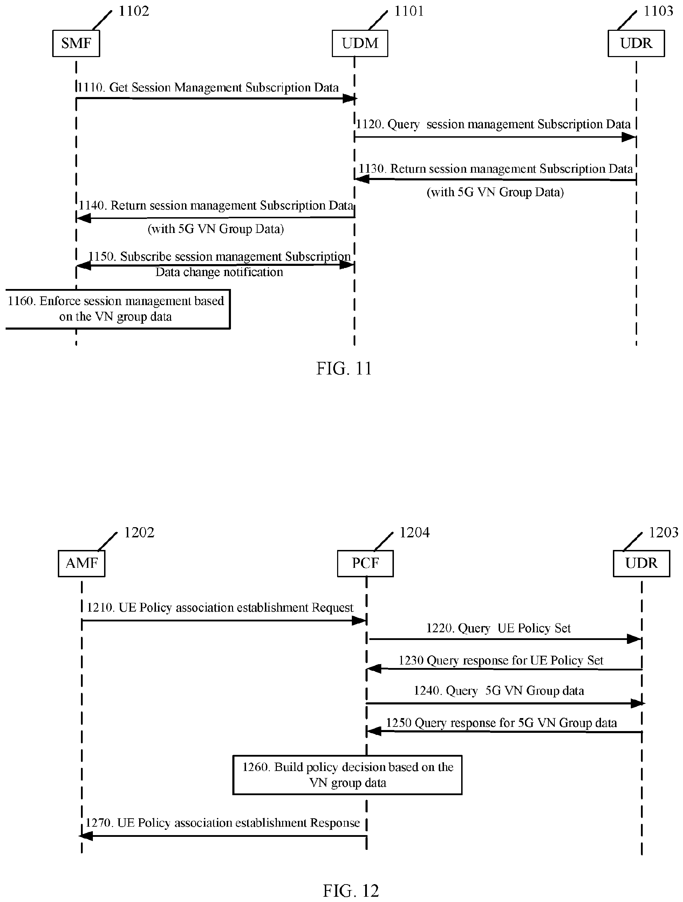

FIG. 11 illustrates an exemplary procedure for session management according to embodiments of the present invention. In this example, it takes UDM as an example of the first network node, SMF as an example of the second network node, and the UDR as an example of the third network node. The UDM 1101 provides session management subscription data to the SMF 1102 with 5G VN group data, so the SMF 1102 could base on the VN group data to enforce session management for users belongs to the 5G VN group.

As shown in FIG. 11, at step 1110, the SMF 1102 gets session management subscription data from the UDM 1101. The input parameter may base on an identity of a terminal device, such as SUPI, and the visiting PLMN-ID. At step 1120, the UDM 1101 may query session management subscription data from the UDR 1103. In response, the UDR 1103 may get the session management subscription data from a database and return the data to the UDM 1101, at step 1130.

If the terminal device is a member of a 5G VN Group, the UDM 1101 retrieves UE subscription data and corresponding 5G VN group data from the UDR 1103. The UDR 1103 adds the 5G VN Group data in the session management subscription data for the VN groups to which the terminal device belongs. Then, the UDM 1101 provides the session management subscription data with 5G VN group data included to the SMF 1102, in step 1140. As such, the corresponding 5G VN group data is included in the session management subscription data and provided to the SMF 1102.

According to some embodiments, Table 2 can be updated into Table 6 with new attributes for 5G VN Group data in the session management subscription data.

**Table 6: Updated Definition of type SessionManagementSubscriptionData (update highlighted)**

| **Attribute name** | **Data type** | **P** | **Cardinality** | **Description** |
|---|---|---|---|---|
| singleNssai | Snssai | M | 1 | A single Network Slice Selection Assistance Information |
| dnnConfigurations | map(DnnConfigurat ion) | O | 0..N | Additional DNN configurations for the network slice; |
| | | | | A map (list of key-value pairs where dnn serves as key; see clause 6.1.6.1) of DnnConfigurations. |
| internalGroupIds | array(GroupId) | O | 1..N | List of internal group identifier; see 3GPP TS 23.501 [2] clause 5.9.7 |
| vnGroupInfo | map(VnGroupData) | O | 1..N | A map of 5G VN group data (GroupId serves as key) |
| sharedVnGroupDataId s | map(SharedDataId) | O | 0..N | A map of identifiers of shared 5G VN group data (GroupId serves as key), only present if vnGroupInfo not present |
| traceData | TraceData | O | 0..1 | Trace requirements about the UE, only sent to SMF in the HPLMN or one of its equivalent PLMN(s) |
| sharedDnnConfigurati onsId | SharedDataId | O | 0..1 | Identifier of shared data for DNN configuration. |
| sharedTraceDataId | SharedDataId | O | 0..1 | Identifier of shared data for trace requirements |
| odbPacketServices | OdbPacketServices | O | 0..1 | Operator Determined Barring for Packet Oriented Services |
| NOTE: A single UE-individual dnnConfiguration (within dnnConfigurations) may clash with a shared dnnConfiguration (i.e. both have the same dnn value as key). In this case the UE-individual dnnConfiguration takes precedence. | | | | |

In an embodiment, the UDM 1102 can provide the Subscription Data Management (SDM) service to service consumers through a Nudm_SDM interface. An exemplary Application Programming Interface (API) for the Nudm_SDM interface is defined in the later appendix A.2.

At step 1150, the SMF 1102 may subscribe a change notification of session management subscription data from the UDM 1101. Then, once the related subscription data changed, it will get notified of the changed data as described in FIG. 13.

At step 1160, the SMF 1102 may enforce the session management for the terminal device, based on the 5G VN group data of at least one group to which the terminal device belongs.

FIG. 12 illustrates an exemplary procedure for controlling a policy for a terminal. In this example, it takes AMF as an example of the second network node, UDR as an example of the third network node, and PCF as an example of the fourth network node. The PCF 1204 builds a UE policy based on 5G VN group data for a group to which a terminal device belongs. The 5G VN group data can be retrieved from the UDR 1203.

As shown in FIG. 12, at step 1210, an AMF 1202 transmits to the PCF 1204, a request for UE policy association establishment for a terminal device. In an example, the AMF 1202 can select a PCF (e.g. the PCF 1204) to create a UE policy association with the PCF and to retrieve a UE policy, based on a local policy of the AMF 1202. A notification URI (Uniform Resource Identifier) encoded as "notificationUri" attribute may be contained in the request for receiving of the data change notifications from the PCF 1204. It can also implicitly indicate a subscription of a data change notification from the PCF 1204. The corresponding data change notification procedure is depitced later in FIG. 13.

If the PCF 1204 does not have the subscription data or the latest list of UE policy section identifiers (UPSIs) for the terminal device, it invokes a Query service operation to the UDR 1203, by sending an HTTP GET request for a resource of UE policy set at step 1220. The request can comprises a parameter "UEPolicySet" indicating the type of required data.

At step 1230, the UDR 1203 sends a response to the PCF 1204 with the latest UPSIs and its content, and/or the subscription data for the terminal device.

At step 1240, for a group to which the terminal device belongs, the PCF 1204 can query the UDR 1203 for 5G VN Group data. The group data may be utilized for policy association establishment with the terminal device. Then, the UDR 1203 can send a response to the PCF 1204 for the 5G VN Group data, at step 1250.

Then, at step 1260, the PCF 1204 builds the UE policy based on the 5G VN group data. The PCF 1204 can transmit a response for the policy association establishment to the AMF 1202, at step 1270. For example, the PCF 1204 can send a response to the AMF 1202 with a Policy Control Request Trigger(s), if applicable.

In some examples, the query for the 5G VN group data of step 1240 may be transmitted in a same message as the request of step 1220. Similarly, in some examples, the query response for the 5G VN group data can be return from the UDR 1203 to the PCF 1204, in a same message as the query response for UE policy set.

FIG. 13 illustrates an exemplary update procedure triggered by a change of group data. In this example, it takes UDM as an example of the first network node, AMF and SMF as an example of the second network node, UDR as an example of the third network node, and PCF as an example of the fourth network node. In this procedure, access and mobility data, session management data, and UE policy can be updated at related network nodes based on a change to 5G VN group data.

As shown in FIG. 13, at step 1310, an operator provisions an update of the 5G VN group data into a UDR 1303 through a provisioning system 1305. The UDR 1303 can persist (1320) the updated 5G VN group data, and can feedback (1330) to the operator a result of the provisioning update through the provisioning system 1305 as the confirmation.

At step 1340A, the UDR 1303 notifies the UDM 1301 of the change of the 5G VN group data. In an example, the UDR 1303 can transmit updated group data to the UDM 1301.

At step 1350A, the UDM 1301 notifies the change of the 5G VN group data to an AMF 1302a. In an example, the UDM 1301 can transmit an updated access and mobility subscription data to the AMF 1302a based on the change of the group data. Then, at step 1360, the AMF 1302a can enforce an access and mobility control based on the updated 5G VN group data.

At step 1350B, the UDM 1301 notifies the change of the 5G VN group data to an SMF 1302b. In an example, the UDM 1301 can transmit an updated session management subscription data to the SMF 1302b based on the change of the group data. Then, at step 1370, the SMF 1302b can enforce a session management base on the updated 5G VN group data. It should be appreciated that the update notification from the UDM 1301 to the AMF 1302a can be performed in parallel with the update notification to the SMF 1302b. This means that the order between the step1350A and the step 1350B can be changed.

At step 1340B, the UDR 1303 notify the PCF 1304 of the change of the 5G VN group data. In an example, the UDR 1303 can transmit updated group data to the PCF 1304.Then, the PCF 1304 can build an updated UE policy based on the updated 5G VN group data, at step 1380. Then, UE configurations at respective network function nodes (e.g. AMF, SMF) can be updated accordingly for updating a UE policy, at step 1390. It should be appreciated that the update notification from the UDR 1303 to the UDM 1301 can be performed in parallel with the update notification to the PCF 1304. This means that the order between the step1340A and the step 1340B can be changed.

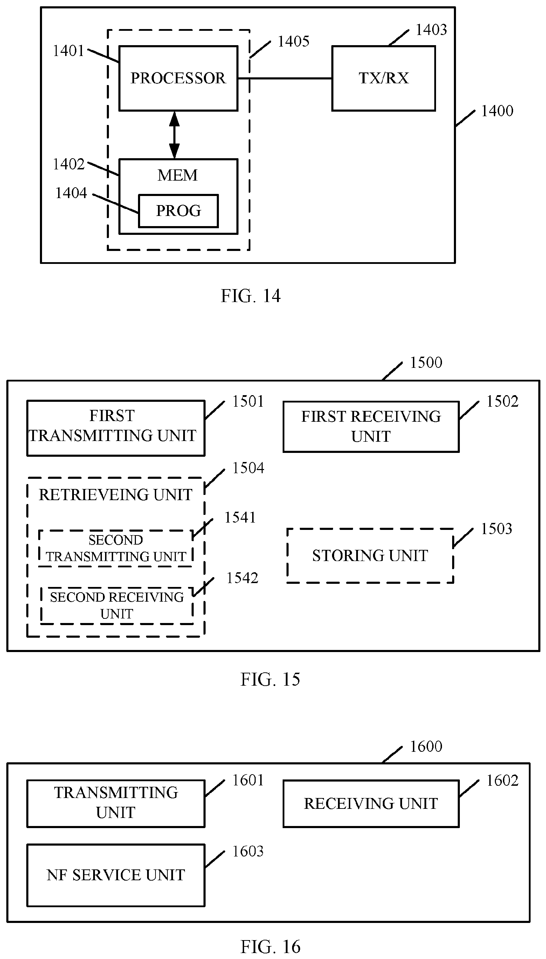

FIG. 14 illustrates a simplified block diagram of an apparatus 1400 that may be embodied in/as a first network node (e.g., a data management functionality like the UDM shown in FIG. 1), or a second network node (e.g., the NF customer like AMF or SMF shown in FIG. 1), or a fourth network node (e.g. a policy control functionality like the PCF shown in FIG. 1), or a third network node (e.g., a data repository like the UDR shown in FIG. 1).

The apparatus 1400 may comprise at least one processor 1401, such as a data processor (DP) and at least one memory (MEM) 1402 coupled to the processor 1401. The apparatus 1400 may further comprise a transmitter TX and receiver RX 1403 coupled to the processor 1401. The MEM 1402 stores a program (PROG) 1404. The PROG 1404 may include instructions that, when executed on the associated processor 1401, enable the apparatus 1400 to operate in accordance with the embodiments of the present invention, for example to perform one of the methods 500, 600, 700, 800. A combination of the at least one processor 1401 and the at least one MEM 1402 may form processing means 1405 adapted to implement various embodiments of the present invention.

Various embodiments of the present invention may be implemented by computer program executable by one or more of the processors 1401, software, firmware, hardware or in a combination thereof.

The MEMs 1402 may be of any type suitable to the local technical environment and may be implemented using any suitable data storage technology, such as semiconductor based memory devices, magnetic memory devices and systems, optical memory devices and systems, fixed memory and removable memory, as non-limiting examples.

The processors 1401 may be of any type suitable to the local technical environment, and may include one or more of general purpose computers, special purpose computers, microprocessors, digital signal processors DSPs and processors based on multicore processor architecture, as non-limiting examples.

Reference is now made to FIG. 15, which illustrates a schematic block diagram of an apparatus 1500 in a first network node. The first network node may be, for example, data management functionality like the UDM shown in FIG. 1. The apparatus 1500 is operable to carry out the exemplary methods 500 described with reference to FIG. 5 and possibly any other processes or methods.

As shown in FIG. 15, the apparatus 1500 may comprise: a first receiving unit 1502 configured to receive, from a second network node, a request for subscription data for a terminal device; and a first transmitting unit 1501 configured to transmit the subscription data to the second network node, wherein the subscription data comprises group data of at least one group to which the terminal device belongs.

In some examples, the apparatus 1500 may further comprise a storing unit 1503 configured to store the subscription data.

In some examples, the apparatus 1500 may further comprise a retrieving unit 1504 configured to obtain the required subscription data from a third network node, such as a UDR. The retrieving unit 1504 may comprise a second transmitting unit 1541 configured to transmit a query for the subscription data to the third network node based on the request received from the second network node, and a second receiving unit 1542 configured to receive the subscription data with the group data included from the third network node.

In some examples, the units of the apparatus 1500 may be configured to implement the operations of corresponding blocks of the method 500, and therefore relevant descriptions provided with reference to method 500 also apply here and thus details will not be repeated.

Reference is now made to FIG. 16, which illustrates a schematic block diagram of an apparatus 1600 in a second network node in a wireless communication network. The second network node may be a NF service consumer, such as the AMF or SMF shown in FIG. 1. The apparatus 1600 is operable to carry out the exemplary method 600 described with reference to FIG. 6 and possibly any other processes or methods.

As illustrated in FIG. 16, the apparatus 1600 may comprises a transmitting unit 1601 configured to transmit a request for subscription data for a terminal device to a first network node, and a receiving unit 1602 configured to receive the subscription data from the first network node, wherein the subscription data comprises group data of at least one group to which the terminal device belongs.

In some examples, the apparatus 1600 may further comprise a NF service unit 1603 configured to perform a management on a network function service for the terminal device based on the group data.

In some examples, the units of the apparatus 1600 may be configured to implement the operations of corresponding blocks of the method 600, and therefore relevant descriptions provided with reference to method 600 also apply here and thus details will not be repeated.

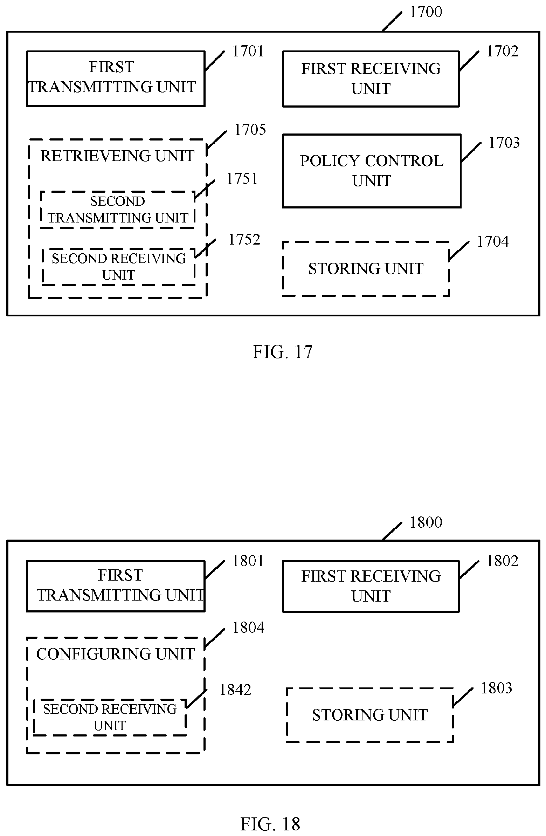

Reference is now made to FIG.17, which illustrates a schematic block diagram of an apparatus 1700 in a fourth network node in a wireless communication network. The fourth network node may be, for example, the PCF shown in FIG. 1. The apparatus 1700 is operable to carry out the method 700 described with reference to FIG. 7 and possibly any other processes or methods.

As shown in FIG. 17, the apparatus 1700 may comprise a receiving unit 1702 configured to receive, from a second network node, a request for policy association establishment with a terminal device; a policy control unit 1703 configured to establish a policy for the terminal device based on group data of at least one group to which the terminal device belongs; and a transmitting unit 1701 configured to transmit a response for policy association establishment to the second network node.

In some examples, the units of the apparatus 1700 may be configured to implement the operations of corresponding blocks of the method 700, and therefore relevant descriptions provided with reference to method 700 also apply here and thus details will not be repeated.

Reference is now made to FIG.18, which illustrates a schematic block diagram of an apparatus 1800 in a third network node in a wireless communication network. The third network node may be, for example, the UDR shown in FIG. 1. The apparatus 1800 is operable to carry out the method 800 described with reference to FIG. 8 and possibly any other processes or methods.

As shown in FIG. 18, the apparatus 1800 may comprise a first receiving unit 1802 configured to receive a query related to at least one group to which a terminal device belongs; and a first transmitting unit 1801 configured to transmit group data of the at least one group in response to the query.

In some examples, the apparatus 1800 may further comprise a configuration unit 1804 configured to obtain configurations of the group data. In an example, the configuration unit 1804 may comprise a second receiving 1842 configured to receive a configuration of the group data.

In some examples, the apparatus 1800 may further comprise a storing unit 1803 configured to store the configuration of the group data.

In some examples, the units of the apparatus 1800 may be configured to implement the operations of corresponding blocks of the method 800, and therefore relevant descriptions provided with reference to method 800 also apply here and thus details will not be repeated.

Although some embodiments are described in the context of an exemplary network shown in FIG. 1, the principle and concept of the present invention may be more generally applicable to other network architectures. Through embodiments as described in the present invention, the overall behavior of a 5G VN group can be controlled, by controlling an individual member of a group to comply with the requirements defined in the group data for the 5G VN group. So the 5G VN group can be managed as required.

In addition, the present invention may also provide a carrier containing the computer program as mentioned above, wherein the carrier is one of an electronic signal, optical signal, radio signal, or computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function, or means that may be configured to perform two or more functions. For example, these techniques may be implemented in hardware (one or more apparatuses), firmware (one or more apparatuses), software (one or more modules), or combinations thereof. For a firmware or software, implementation may be made through modules (e.g., procedures, functions, and so on) that perform the functions described herein.

Exemplary embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, the scope of the invention is defined by the appended claims. Certain features that are described in the context of separate embodiments may also be implemented in combination in a single embodiment. Conversely, various features that are described in the context of a single embodiment may also be implemented in multiple embodiments separately or in any suitable sub-combination.

While this specification contains many specific implementation details, the scope of the invention is defined by the appended claims. Certain features that are described in this specification in the context of separate embodiments can also be implemented in combination in a single embodiment. Conversely, various features that are described in the context of a single embodiment can also be implemented in multiple embodiments separately or in any suitable sub-combination.

It will be obvious to a person skilled in the art that, as the technology advances, the inventive concept can be implemented in various ways. It is to be understood that modifications and variations may be made as long as they fall within the scope of the invention as defined by the appended claims.

### A.2 Nudm_SDM API

```
 openapi: 3.0.0
 info:
 version: '2.1.0.alpha-1'
 title: 'Nudm SDM'
 description: |
 Nudm Subscriber Data Management Service.
 © 2019, 3GPP Organizational Partners (ARIB, ATIS, CCSA, ETSI, TSDSI, TTA, TTC).
 All rights reserved.
 externalDocs:
 description: 3GPP TS 29.503 Unified Data Management Services, version 16.0.0
 url: 'http://www.3gpp.org/ftp/Specs/archive/29 series/29.503/'
 servers:
 - url: '{apiRoot}/nudm-sdm/v2'
 variables:
 apiRoot:
 default: https://example.com
 description: apiRoot as defined in clause clause 4.4 of 3GPP TS 29.501.
 security:
 - oAuth2ClientCredentials:
 - nudm-sdm
 - { }
 paths:
 /{supi}:
 get:
 summary: retrieve multiple data sets
 operationId: GetDataSets
 tags:
 - Retrieval of multiple data sets
 parameters:
 - name: supi
 in: path
 description: Identifier of the UE
 required: true
 schema:
 $ref: 'TS29571 CommonData.yaml#/components/schemas/Supi'
  - name: dataset-names
 in: query
 style: form
 explode: false
 description: List of dataset names
 required: true
 schema:
  $ref: '#/components/schemas/DatasetNames'
   - name: plmn-id
 in: query
 description: serving PLMN ID
 content:
 application/ison:
       schema:
     $ref: 'TS29571_CommonData.yaml#/components/schemas/PlmnId'
 - name: supported-features
 in: query
 description: Supported Features
  schema:
   $ref: 'TS29571_CommonData.yaml#/components/schemas/SupportedFeatures'
 - name: If-None-Match
 in: header
 description: Validator for conditional requests, as described in RFC 7232, 3.2
  schema:
   type: string
 - name: If-Modified-Since
 in: header
 description: Validator for conditional requests, as described in RFC 7232, 3.3
  schema:
   type: string
   responses:
 '200':
 description: Expected response to a valid request
 content:
   application/json:
    schema:
     $ref: '#/components/schemas/SubscriptionDataSets'
 headers:
   Cache-Control:
    description: Cache-Control containing max-age, as described in RFC 7234, 5.2
    schema:
     type: string
   ETag:
    description: Entity Tag, containing a strong validator, as described in RFC 7232, 2.3
    schema:
     type: string
   Last-Modified:
    description: Timestamp for last modification of the resource, as described in RFC 7232, 2.2
    schema:
     type: string
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /{supi}/nssai:
 get:
 summary: retrieve a UE's subscribed NSSAI
 operationId: GetNSSAI
 tags:
 - Slice Selection Subscription Data Retrieval
 parameters:
 - name: supi
 in: path
 description: Identifier of the UE
 required: true
  schema:
   $ref: 'TS29571_CommonData.yaml#/components/schemas/Supi'
 - name: supported-features
 in: query
 description: Supported Features
  schema:
   $ref: 'TS29571_CommonData.yaml#/components/schemas/SupportedFeatures'
 - name: plmn-id
 in: query
 description: serving PLMN ID
 content:
   application/json:
    schema:
     $ref: 'TS29571_CommonData.yaml#/components/schemas/PlmnId'
 - name: If-None-Match
 in: header
 description: Validator for conditional requests, as described in RFC 7232, 3.2
  schema:
   type: string
 - name: If-Modified-Since
 in: header
 description: Validator for conditional requests, as described in RFC 7232, 3.3
  schema:
   type: string
   responses:
 '200':
 description: Expected response to a valid request
 content:
   application/json:
    schema:
     $ref: '#/components/schemas/Nssai'
 headers:
   Cache-Control:
    description: Cache-Control containing max-age, as described in RFC 7234, 5.2
    schema:
     type: string
   ETag:
    description: Entity Tag, containing a strong validator, as described in RFC 7232, 2.3
    schema:
     type: string
   Last-Modified:
    description: Timestamp for last modification of the resource, as described in RFC 7232, 2.2
    schema:
     type: string
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /{supi}/am-data:
 get:
 summary: retrieve a UE's Access and Mobility Subscription Data
 operationId: GetAmData
 tags:
 - Access and Mobility Subscription Data Retrieval
 parameters:
 - name: supi
 in: path
 description: Identifier of the UE
 required: true
  schema:
   $ref: 'TS29571_CommonData.yaml#/components/schemas/Supi'
 - name: supported-features
 in: query
 description: Supported Features
  schema:
   $ref: 'TS29571_CommonData.yaml#/components/schemas/SupportedFeatures'
 - name: plmn-id
 in: query
 description: serving PLMN ID
 content:
   application/json:
    schema:
     $ref: 'TS29571_CommonData.yaml#/components/schemas/PlmnId'
 - name: If-None-Match
 in: header
 description: Validator for conditional requests, as described in RFC 7232, 3.2
  schema:
   type: string
 - name: If-Modified-Since
 in: header
 description: Validator for conditional requests, as described in RFC 7232, 3.3
  schema:
   type: string
   responses:
 '200':
 description: Expected response to a valid request
 content:
   application/json:
    schema:
     $ref: '#/components/schemas/AccessAndMobilitySubscriptionData'
 headers:
   Cache-Control:
    description: Cache-Control containing max-age, as described in RFC 7234, 5.2
    schema:
     type: string
   ETag:
    description: Entity Tag, containing a strong validator, as described in RFC 7232, 2.3
    schema:
     type: string
   Last-Modified:
    description: Timestamp for last modification of the resource, as described in RFC 7232, 2.2
    schema:
     type: string
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /{supi}/smf-select-data:
 get:
 summary: retrieve a UE's SMF Selection Subscription Data
 operationId: GetSmfSelData
 tags:
 - SMF Selection Subscription Data Retrieval
 parameters:
 - name: supi
 in: path
 description: Identifier of the UE
 required: true
  schema:
   $ref: 'TS29571_CommonData.yaml#/components/schemas/Supi'
 - name: supported-features
 in: query
 description: Supported Features
  schema:
   $ref: 'TS29571_CommonData.yaml#/components/schemas/SupportedFeatures'
 - name: plmn-id
 in: query
 description: serving PLMN ID
 content:
   application/json:
    schema:
     $ref: 'TS29571_CommonData.yaml#/components/schemas/PlmnId'
 - name: If-None-Match
 in: header
 description: Validator for conditional requests, as described in RFC 7232, 3.2
  schema:
   type: string
 - name: If-Modified-Since
 in: header
 description: Validator for conditional requests, as described in RFC 7232, 3.3
  schema:
   type: string
   responses:
 '200':
 description: Expected response to a valid request
 content:
   application/json:
    schema:
     $ref: '#/components/schemas/SmfSelectionSubscriptionData'
 headers:
   Cache-Control:
    description: Cache-Control containing max-age, as described in RFC 7234, 5.2
    schema:
     type: string
   ETag:
    description: Entity Tag, containing a strong validator, as described in RFC 7232, 2.3
    schema:
     type: string
   Last-Modified:
    description: Timestamp for last modification of the resource, as described in RFC 7232, 2.2
    schema:
     type: string
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /{supi}/ue-context-in-smf-data:
 get:
 summary: retrieve a UE's UE Context In SMF Data
 operationId: GetUeCtxInSmfData
 tags:
 - UE Context In SMF Data Retrieval
 parameters:
 - name: supi
 in: path
 description: Identifier of the UE
 required: true
  schema:
   $ref: 'TS29571_CommonData.yaml#/components/schemas/Supi'
 - name: supported-features
 in: query
 description: Supported Features
  schema:
   $ref: 'TS29571_CommonData.yaml#/components/schemas/SupportedFeatures'
   responses:
 '200':
 description: Expected response to a valid request
 content:
   application/json:
    schema:
     $ref: '#/components/schemas/UeContextInSmfData'
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /{supi}/ue-context-in-smsf-data:
 get:
 summary: retrieve a UE's UE Context In SMSF Data
 operationId: GetUeCtxInSmsfData
 tags:
 - UE Context In SMSF Data Retrieval
 parameters:
 - name: supi
 in: path
 description: Identifier of the UE
 required: true
  schema:
   $ref: 'TS29571_CommonData.yaml#/components/schemas/Supi'
 - name: supported-features
 in: query
 description: Supported Features
  schema:
   $ref: 'TS29571_CommonData.yaml#/components/schemas/SupportedFeatures'
   responses:
 '200':
 description: Expected response to a valid request
 content:
   application/json:
    schema:
     $ref: '#/components/schemas/UeContextInSmsfData'
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /{supi}/trace-data:
 get:
 summary: retrieve a UE's Trace Configuration Data
 operationId: GetTraceConfigData
 tags:
 - Trace Configuration Data Retrieval
 parameters:
 - name: supi
 in: path
 description: Identifier of the UE
 required: true
  schema:
   $ref: 'TS29571_CommonData.yaml#/components/schemas/Supi'
 - name: supported-features
 in: query
 description: Supported Features
  schema:
   $ref: 'TS29571_CommonData.yaml#/components/schemas/SupportedFeatures'
 - name: plmn-id
 in: query
 description: serving PLMN ID
 content:
   application/json:
    schema:
     $ref: 'TS29571_CommonData.yaml#/components/schemas/PlmnId'
 - name: If-None-Match
 in: header
 description: Validator for conditional requests, as described in RFC 7232, 3.2
  schema:
   type: string
 - name: If-Modified-Since
 in: header
 description: Validator for conditional requests, as described in RFC 7232, 3.3
  schema:
   type: string
   responses:
 '200':
 description: Expected response to a valid request
 content:
   application/json:
    schema:
     $ref: '#/components/schemas/TraceDataResponse'
 headers:
   Cache-Control:
    description: Cache-Control containing max-age, as described in RFC 7234, 5.2
    schema:
     type: string
   ETag:
    description: Entity Tag, containing a strong validator, as described in RFC 7232, 2.3
    schema:
     type: string
   Last-Modified:
    description: Timestamp for last modification of the resource, as described in RFC 7232, 2.2
    schema:
     type: string
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /{supi}/sm-data:
 get:
 summary: retrieve a UE's Session Management Subscription Data
 operationId: GetSmData
 tags:
 - Session Management Subscription Data Retrieval
 parameters:
 - name: supi
 in: path
 description: Identifier of the UE
 required: true
  schema:
   $ref: 'TS29571_CommonData.yaml#/components/schemas/Supi'
 - name: supported-features
 in: query
 description: Supported Features
  schema:
   $ref: 'TS29571_CommonData.yaml#/components/schemas/SupportedFeatures'
 - name: single-nssai
 in: query
 content:
   application/json:
    schema:
     $ref: 'TS29571_CommonData.yaml#/components/schemas/Snssai'
 - name: dnn
 in: query
  schema:
   $ref: 'TS29571_CommonData.yaml#/components/schemas/Dnn'
 - name: plmn-id
 in: query
 content:
   application/json:
    schema:
     $ref: 'TS29571_CommonData.yaml#/components/schemas/PlmnId'
 - name: If-None-Match
 in: header
 description: Validator for conditional requests, as described in RFC 7232, 3.2
  schema:
   type: string
 - name: If-Modified-Since
 in: header
 description: Validator for conditional requests, as described in RFC 7232, 3.3
  schema:
   type: string
   responses:
 '200':
 description: Expected response to a valid request
 content:
   application/json:
    schema:
     type: array
     items:
      $ref: '#/components/schemas/SessionManagementSubscriptionData'
     minItems: 1
 headers:
   Cache-Control:
    description: Cache-Control containing max-age, as described in RFC 7234, 5.2
    schema:
     type: string
   ETag:
    description: Entity Tag, containing a strong validator, as described in RFC 7232, 2.3
    schema:
     type: string
   Last-Modified:
    description: Timestamp for last modification of the resource, as described in RFC 7232, 2.2
    schema:
     type: string
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /{supi}/sms-data:
 get:
 summary: retrieve a UE's SMS Subscription Data
 operationId: GetSmsData
 tags:
 - SMS Subscription Data Retrieval
 parameters:
 - name: supi
 in: path
 description: Identifier of the UE
 required: true
  schema:
   $ref: 'TS29571_CommonData.yaml#/components/schemas/Supi'
 - name: supported-features
 in: query
 description: Supported Features
  schema:
   $ref: 'TS29571_CommonData.yaml#/components/schemas/SupportedFeatures'
 - name: plmn-id
 in: query
 content:
   application/json:
    schema:
     $ref: 'TS29571_CommonData.yaml#/components/schemas/PlmnId'
 - name: If-None-Match
 in: header
 description: Validator for conditional requests, as described in RFC 7232, 3.2
  schema:
   type: string
 - name: If-Modified-Since
 in: header
 description: Validator for conditional requests, as described in RFC 7232, 3.3
  schema:
   type: string
   responses:
 '200':
 description: Expected response to a valid request
 content:
   application/json:
    schema:
     $ref: '#/components/schemas/SmsSubscriptionData'
 headers:
   Cache-Control:
    description: Cache-Control containing max-age, as described in RFC 7234, 5.2
    schema:
     type: string
   ETag:
    description: Entity Tag, containing a strong validator, as described in RFC 7232, 2.3
    schema:
     type: string
   Last-Modified:
    description: Timestamp for last modification of the resource, as described in RFC 7232, 2.2
    schema:
     type: string
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /{supi}/sms-mng-data:
 get:
 summary: retrieve a UE's SMS Management Subscription Data
 operationId: GetSmsMngtData
 tags:
 - SMS Management Subscription Data Retrieval
 parameters:
 - name: supi
 in: path
 description: Identifier of the UE
 required: true
  schema:
   $ref: 'TS29571_CommonData.yaml#/components/schemas/Supi'
 - name: supported-features
 in: query
 description: Supported Features
  schema:
   $ref: 'TS29571_CommonData.yaml#/components/schemas/SupportedFeatures'
 - name: plmn-id
 in: query
 content:
   application/json:
    schema:
     $ref: 'TS29571_CommonData.yaml#/componentsischemas/PlmnId'
 - name: If-None-Match
 in: header
 description: Validator for conditional requests, as described in RFC 7232, 3.2
  schema:
   type: string
 - name: If-Modified-Since
 in: header
 description: Validator for conditional requests, as described in RFC 7232, 3.3
  schema:
   type: string
   responses:
 '200':
 description: Expected response to a valid request
 content:
   application/json:
    schema:
     $ref: '#/components/schemas/SmsManagementSubscriptionData'
 headers:
   Cache-Control:
    description: Cache-Control containing max-age, as described in RFC 7234, 5.2
    schema:
     type: string
   ETag:
    description: Entity Tag, containing a strong validator, as described in RFC 7232, 2.3
    schema:
     type: string
   Last-Modified:
    description: Timestamp for last modification of the resource, as described in RFC 7232, 2.2
    schema:
     type: string
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /{supi}/sdm-subscriptions:
 post:
 summary: subscribe to notifications
 operationId: Subscribe
 tags:
 - Subscription Creation
 parameters:
 - name: supi
 in: path
 description: SUPI of the user
 required: true
  schema:
   $ref: 'TS29571_CommonData.yaml#/components/schemas/Supi'
   requestBody:
 content:
 application/json:
   schema:
    $ref: '#/components/schemas/SdmSubscription'
 required: true
 responses:
 '201':
 description: Expected response to a valid request
 content:
   application/json:
    schema:
     $ref: '#/components/schemas/SdmSubscription'
 headers:
   Location:
    description: 'Contains the URI of the newly created resource, according to the structure:
    {apiRoot}/nudm-sdm/<apiVersion>/{supi}/sdm-subscriptions/{subscriptionId}'
    required: true
    schema:
     type: string
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '501':
  $ref: 'TS29571_CommonData.yaml#/components/responses/501'
 '503':
  $ref: 'TS29571_CommonData.yaml#/components/responses/503'
 default:
 description: Unexpected error
 callbacks:
 datachangeNotification:
  '{request.body#/callbackReference}':
   post:
    requestBody:
     required: true
     content:
      application/json:
       schema:
         $ref: '#/components/schemas/ModificationNotification'
    responses:
     '204':
      description: Successful Notification response
     '307':
      description: Temporary Redirect
      content:
       application/problem+json:
         schema:
          $ref: 'TS29571_CommonData.yaml#/components/schemas/ProblemDetails'
      headers:
       Location:
         description: 'Contains the new Callback URI of the
targetNF Service Consumer (e.g. AMF) to which the request is
         redirected'
         required: true
         schema:
          type: string
     '308':
      description: Permanent Redirect
      content:
       application/problem+json:
         schema:
          $ref: 'TS29571_CommonData.yaml#/components/schemas/ProblemDetails'
      headers:
       Location:
         description: 'Contains the new Callback URI of the
targetNF Service Consumer (e.g. AMF) to which the request is
         redirected'
         required: true
         schema:
          type: string
     '400':
      $ref: 'TS29571_CommonData.yaml#/components/responses/400'
     '404':
      $ref: 'TS29571_CommonData.yaml#/components/responses/404'
     '500':
      $ref: 'TS29571_CommonData.yaml#/components/responses/500'
     '503':
      $ref: 'TS29571_CommonData.yaml#/components/responses/503'
     default:
      description: Unexpected error
      /{supi}/sdm-subscriptions/{subscriptionId}:
      delete:
      summary: unsubscribe from notifications
      operationId: Unsubscribe
      tags:
 - Subscription Deletion
 parameters:
 - name: supi
 in: path
 description: SUPI of the user
 required: true
  schema:
   $ref: 'TS29571_CommonData.yaml#/components/schemas/Supi'
 - name: subscriptionId
 in: path
 description: Id of the SDM Subscription
 required: true
  schema:
   type: string
   responses:
 '204':
 description: Successful response
 '400':
  $ref: 'TS29571_CommonData.yaml#/components/responses/400'
 '500':
  $ref: 'TS29571_CommonData.yaml#/components/responses/500'
 '503':
  $ref: 'TS29571_CommonData.yaml#/components/responses/503'
 default:
 description: Unexpected error
 patch:
 summary: modify the subscription
 operationId: Modify
 tags:
 - Subscription Modification
 parameters:
 - name: supi
 in: path
 description: SUPI of the user
 required: true
  schema:
   $ref: 'TS29571_CommonData.yaml#/components/schemas/Supi'
 - name: subscriptionId
 in: path
 description: Id of the SDM Subscription
 required: true
  schema:
   type: string
   requestBody:
 content:
 application/merge-patch+json:
   schema:
    $ref: '#/components/schemas/SdmSubsModification'
 required: true
 responses:
 '200':
 description: Expected response to a valid request
 content:
   application/json:
    schema:
     $ref: '#/components/schemas/SdmSubscription'
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /{gpsi}/id-translation-result:
 get:
 summary: retrieve a UE's SUPI
 operationId: GetSupi
 tags:
 - GPSI to SUPI Translation
 parameters:
 - name: gpsi
 in: path
 description: Identifier of the UE
 required: true
  schema:
   $ref: 'TS29571_CommonData.yaml#/components/schemas/Gpsi'
 - name: supported-features
 in: query
 description: Supported Features
  schema:
   $ref: 'TS29571_CommonData.yaml#/components/schemas/SupportedFeatures'
 - name: If-None-Match
 in: header
 description: Validator for conditional requests, as described in RFC 7232, 3.2
  schema:
   type: string
 - name: If-Modified-Since
 in: header
 description: Validator for conditional requests, as described in RFC 7232, 3.3
  schema:
   type: string
   responses:
 '200':
 description: Expected response to a valid request
 content:
   application/json:
    schema:
     $ref: '#/components/schemas/IdTranslationResult'
 headers:
   Cache-Control:
    description: Cache-Control containing max-age, as described in RFC 7234, 5.2
    schema:
     type: string
   ETag:
    description: Entity Tag, containing a strong validator, as described in RFC 7232, 2.3
    schema:
     type: string
   Last-Modified:
    description: Timestamp for last modification of the resource, as described in RFC 7232, 2.2
    schema:
     type: string
 '400':
  $ref: 'TS29571_CommonData.yaml#t/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /{supi}/am-data/sor-ack:
 put:
 summary: Nudm_Sdm Info service operation
 operationId: SorAckInfo
 tags:
 - Providing acknowledgement of Steering of Roaming
 parameters:
 - name: supi
 in: path
 description: Identifier of the UE
 required: true
  schema:
   $ref: 'TS29571_CommonData.yaml#/components/schemas/Supi'
   requestBody:
 content:
 application/json:
   schema:
    $ref: '#/components/schemas/AcknowledgeInfo'
    responses:
 '204':
 description: Successful acknowledgement
 '400':
  $ref: 'TS29571_CommonData.yaml#/components/responses/400'
 '500':
  $ref: 'TS29571_CommonData.yaml#/components/responses/500'
 '503':
  $ref: 'TS29571_CommonData.yaml#/components/responses/503'
 default:
 description: Unexpected error
 /{supi}/am-data/upu-ack:
 put:
 summary: Nudm_Sdm Info for UPU service operation
 operationId: UpuAck
 tags:
 - Providing acknowledgement of UE Parameters Update
 parameters:
 - name: supi
 in: path
 description: Identifier of the UE
 required: true
  schema:
   $ref: 'TS29571_CommonData.yaml#/components/schemas/Supi'
   requestBody:
 content:
 application/json:
   schema:
    $ref: '#/components/schemas/AcknowledgeInfo'
    responses:
 '204':
 description: Successful acknowledgement
 '400':
  $ref: 'TS29571_CommonData.yaml#/components/responses/400'
 '500':
  $ref: 'TS29571_CommonData.yaml#/components/responses/500'
 '503':
  $ref: 'TS29571_CommonData.yaml#/components/responses/503'
 default:
 description: Unexpected error
 /shared-data:
 get:
 summary: retrieve shared data
 operationId: GetSharedData
 tags:
 - Retrieval of shared data
 parameters:
 - name: shared-data-ids
 in: query
 description: List of shared data ids
 required: true
  style: form
 explode: false
  schema:
   $ref: '#/components/schemas/SharedDataIds'
 - name: supportedFeatures
 in: query
 description: Supported Features
  schema:
   $ref: 'TS29571_CommonData.yaml#/components/schemas/SupportedFeatures'
 - name: If-None-Match
 in: header
 description: Validator for conditional requests, as described in RFC 7232, 3.2
  schema:
   type: string
 - name: If-Modified-Since
 in: header
 description: Validator for conditional requests, as described in RFC 7232, 3.3
  schema:
   type: string
   responses:
 '200':
 description: Expected response to a valid request
 content:
   application/json:
    schema:
     type: array
     items:
      $ref: '#/components/schemas/SharedData'
     minItems: 1
 headers:
   Cache-Control:
    description: Cache-Control containing max-age, as described in RFC 7234, 5.2
    schema:
     type: string
   ETag:
    description: Entity Tag, containing a strong validator, as described in RFC 7232, 2.3
    schema:
     type: string
   Last-Modified:
    description: Timestamp for last modification of the resource, as described in RFC 7232, 2.2
    schema:
     type: string
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /shared-data-subscriptions:
 post:
 summary: subscribe to notifications for shared data
 operationId: SubscribeToSharedData
 tags:
 - Subscription Creation for shared data
 requestBody:
 content:
 application/json:
   schema:
    $ref: '#/components/schemas/SdmSubscription'
 required: true
 responses:
 '201':
 description: Expected response to a valid request
 content:
   application/json:
    schema:
     $ref: '#/components/schemas/SdmSubscription'
 headers:
   Location:
    description: 'Contains the URI of the newly created resource, according to the structure:
    {apiRoot}/nudm-sdm/<apiVersion>/shared-data-subscriptions/{subscriptionId}'
    required: true
    schema:
     type: string
 '400':
  $ref: 'TS29571_CommonData.yaml#/components/responses/400'
 '404':
  $ref: 'TS29571_CommonData.yaml#/components/responses/404'
 default:
 description: Unexpected error
 callbacks:
 datachangeNotification:
  '{request.body#/callbackReference}':
   post:
    requestBody:
     required: true
     content:
      application/json:
       schema:
         $ref: '#/components/schemas/ModificationNotification'
    responses:
     '204':
      description: Successful Notification response
     '400':
      $ref: 'TS29571_CommonData.yaml#/components/responses/400'
     '404':
      $ref: 'TS29571_CommonData.yaml#/components/responses/404'
     '500':
      $ref: 'TS29571_CommonData.yaml#/components/responses/500'
     '503':
      $ref: 'TS29571_CommonData.yaml#/components/responses/503'
     default:
      description: Unexpected error
      /shared-data-subscriptions/{subscriptionId}:
      delete:
      summary: unsubscribe from notifications for shared data
      operationId: UnsubscribeForSharedData
      tags:
 - Subscription Deletion for shared data
 parameters:
 - name: subscriptionId
 in: path
 description: Id of the Shared data Subscription
 required: true
  schema:
   type: string
   responses:
 '204':
 description: Successful response
 '400':
  $ref: 'TS29571_CommonData.yaml#/components/responses/400'
 '500':
  $ref: 'TS29571_CommonData.yaml#/components/responses/500'
 '503':
  $ref: 'TS29571_CommonData.yaml#/components/responses/503'
 default:
 description: Unexpected error
 patch:
 summary: modify the subscription
 operationId: ModifySharedDataSubs
 tags:
 - Subscription Modification
 parameters:
 - name: subscriptionId
 in: path
 description: Id of the SDM Subscription
 required: true
  schema:
   type: string
   requestBody:
 content:
 application/merge-patch+json:
   schema:
    $ref: '#/components/schemas/SdmSubsModification'
 required: true
 responses:
 '200':
 description: Expected response to a valid request
 content:
   application/json:
    schema:
     $ref: '#/components/schemas/SdmSubscription'
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 /group-data/group-identifiers:
 get:
 summary: Mapping of Group Identifiers
 operationId: GetGroupIdentifiers
 tags:
 - Group Identifiers
 parameters:
 - name: ext-group-id
 in: query
 description: External Group Identifier
 required: false
  schema:
   $ref: "#/components/schemas/ExtGroupId'
 - name: int-group-id
 in: query
 description: Internal Group Identifier
 required: false
  schema:
   $ref: 'TS29571_CommonData.yaml#/components/schemas/GroupId'
 - name: supported-features
 in: query
 description: Supported Features
  schema:
   $ref: 'TS29571_CommonData.yaml#/components/schemas/SupportedFeatures'
 - name: If-None-Match
 in: header
 description: Validator for conditional requests, as described in RFC 7232, 3.2
  schema:
   type: string
 - name: If-Modified-Since
 in: header
 description: Validator for conditional requests, as described in RFC 7232, 3.3
  schema:
   type: string
   responses:
 '200':
 description: Expected response to a valid request
 content:
   application/json:
    schema:
     $ref: '#/ components/schemas/ GroupIdentifiers'
 headers:
   Cache-Control:
    description: Cache-Control containing max-age, as described in RFC 7234, 5.2
    schema:
     type: string
   ETag:
    description: Entity Tag, containing a strong validator, as described in RFC 7232, 2.3
    schema:
     type: string
   Last-Modified:
    description: Timestamp for last modification of the resource, as described in RFC 7232, 2.2
    schema:
     type: string
 '400':
  $ref: 'TS29571_CommonData.yaml#/components/responses/400'
 '404':
  $ref: 'TS29571_CommonData.yaml#/components/responses/404'
 '500':
  $ref: 'TS29571_CommonData.yaml#/components/responses/500'
 '503':
  $ref: 'TS29571_CommonData.yaml#/components/responses/503'
 default:
 description: Unexpected error
 components:
 securitySchemes:
 oAuth2ClientCredentials:
 type: oauth2
 flows:
 clientCredentials:
 tokenUrl: '{nrfApiRoot}/oauth2/token'
  scopes:
   nudm-sdm: Access to the nudm-sdm API
   schemas:
   # COMPLEX TYPES:
   DatasetNames:
   type: array
   items:
 $ref: '#/components/schemas/DataSetName'
 minItems: 2
 uniqueItems: true
 SubscriptionDataSets:
 type: object
 properties:
 amData:
  $ref: '#/components/schemas/AccessAndMobilitySubscriptionData'
 smfSelData:
  $ref: '#/components/schemas/SmfSelectionSubscriptionData'
 uecSmfData:
  $ref: '#/components/schemas/UeContextInSmfData'
 uecSmsfData:
  $ref: '#/components/schemas/UeContextInSmsfData'
 smsSubsData:
  $ref: '#/components/schemas/SmsSubscriptionData'
 smData:
 type: array
 items:
   $ref: '#/components/schemas/SessionManagementSubscriptionData'
  minItems: 1
 traceData:
  $ref: 'TS29571_CommonData.yaml#/components/schemas/TraceData'
 smsMngData:
  $ref: '#/components/schemas/SmsManagementSubscriptionData'
  UeContextInSmsfData:
  type: object
  properties:
 smsfInfo3GppAccess:
  $ref: '#/components/schemas/SmsfInfo'
 smsfInfoNon3GppAccess:
  $ref: '#/components/schemas/SmsfInfo'
  SmsfInfo:
  type: object
  required:
 - smsfInstanceId
 - plmnId
 properties:
 smsfInstanceId:
  $ref: 'TS29571_CommonData.yaml#/components/schemas/NfInstanceId'
 plmnId:
  $ref: 'TS29571_CommonData_yaml#/components/schemas/PlmnId'
  AccessAndMobility SubscriptionData:
  type: object
  properties:
 supportedFeatures:
  $ref: 'TS29571_ CommonData.yaml#/components/schemas/SupportedFeatures'
 gpsis:
 type: array
 items:
   $ref: 'TS29571_CommonData.yaml#/components/schemas/Gpsi'
 internalGroupIds:
 type: array
 items:
   $ref: 'TS29571_CommonData.yaml#/components/schemas/GroupId'
  minItems: 1
 vnGroupInfo:
 type: object
 additionalProperties:
   $ref: '#/components/schemas/VnGroupData'
 sharedVnGroupDataId:
 type: object
 additionalProperties:
   $ref: '#/components/schemas/SharedDataId'
 subscribedUeAmbr:
  $ref: 'TS29571_CommonData.yaml#/components/schemas/AmbrRm'
 nssai:
  $ref: '#/components/schemas/Nssai'
 ratRestrictions:
 type: array
 items:
   $ref: 'TS29571_CommonData.yaml#/components/schemas/RatType'
 forbiddenAreas:
 type: array
 items:
   $ref: 'TS29571_CommonData.yaml#/components/schemas/Area'
 serviceAreaRestriction:
  $ref: 'TS29571_CommonData.yaml#/components/schemas/ServiceAreaRestriction'
 coreNetworkTypeRestrictions:
 type: array
 items:
   $ref: 'TS29571_CommonData.yaml#/components/schemas/CoreNetworkType'
 rfspIndex:
  $ref: 'TS29571_CommonData.yaml#/components/schemas/RfspIndexRm'
 subsRegTimer:
  $ref: 'TS29571_CommonData.yaml#/components/schemas/DurationSecRm'
 ueUsageType:
  $ref: '#/components/schemas/UeUsageType'
 mpsPriority:
  $ref: '#/components/schemas/MpsPriorityIndicator'
 mcsPriority:
  $ref: '#/components/schemas/McsPriorityIndicator'
 activeTime:
  $ref: 'TS29571_CommonData.yaml#/components/schemas/DurationSecRm'
 dlPacketCount:
  $ref: '#/components/schemas/DlPacketCount'
 sorInfo:
  $ref: '#/components/schemas/SorInfo'
 upuInfo:
  $ref: '#/components/schemas/UpuInfo'
 micoAllowed:
  $ref: '#/components/schemas/MicoAllowed'
 sharedAmDataIds:
 type: array
 items:
   $ref: '#/components/schemas/SharedDatald'
  minItems: 1
 odbPacketServices:
  $ref: 'TS29571_CommonData.yaml#/components/schemas/OdbPacketServices'
 subscribedDnnList:
 type: array
 items:
   $ref: 'TS29571_CommonData.yaml#/components/schemas/Dnn'
 serviceGapTime:
  $ref: 'TS29571_CommonData.yaml#/components/schemas/DurationSec'
 traceData:
  $ref: 'TS29571_CommonData.yaml#/components/schemas/TraceData'
  SmfSelectionSubscriptionData:
  type: object
  properties:
 supportedFeatures:
  $ref: 'TS29571CommonData.yaml#/components/schemas/SupportedFeatures'
 subscribedSnssaiInfos:
 type: object
 additionalProperties:
   $ref: '#/components/schemas/SnssaiInfo'
 sharedSnssaiInfosId:
  $ref: '#/components/schemas/SharedDatald'
  SnssaiInfo:
  type: object
  required:
 - dnnInfos
 properties:
 dnnInfos:
 type: array
 items:
   $ref: '#/components/schemas/DnnInfo'
  minItems: 1
  DnnInfo:
  type: object
  required:
 - dnn
 properties:
 dnn:
  $ref: 'TS29571_CommonData.yaml#/components/schemas/Dnn'
 defaultDnnIndicator:
  $ref: '#/components/schemas/DnnIndicator'
 lboRoamingAllowed:
  $ref: '#/components/schemas/LboRoamingAllowed'
 iwkEpsInd:
  $ref: '#/components/schemas/IwkEpsInd'
  Nssai:
  type: object
  required:
  - defaultSingleNssais
  properties:
 supportedFeatures:
  $ref: 'TS29571 CommonData.yaml#/components/schemas/SupportedFeatures'
 defaultSingleNssais:
 type: array
 items:
   $ref: 'TS29571_CommonData.yaml#/components/schemas/Snssai'
  minItems: 1
 singleNssais:
 type: array
 items:
   $ref: 'TS29571_CommonData.yaml#/components/schemas/Snssai'
  minItems: 1 nullable: true
  UeContextInSmfData:
  type: object
  properties:
 pduSessions:
 description: A map (list of key-value pairs where PduSessionId serves as key) of PduSessions
 type: object
 additionalProperties:
   $ref: '#/components/schemas/PduSession'
 pgwInfo:
 type: array
 items:
   $ref: '#/components/schemas/PgwInfo'
  minItems: 1
 emergencyInfo:
  $ref: '#/components/schemas/EmergencyInfo'
  Emergency Info:
  type: object
  oneOf:
 - required:
  - pgwFqdn
 - required:
  - pgwIpAddress
  properties:
 pgwFqdn:
 type: string
 pgwIpAddress:
  $ref: '#/components/schemas/IpAddress'
 smfInstanceId:
  $ref: 'TS29571_CommonData.yaml#/components/schemas/NfInstanceId'
  PduSession:
  type: object
  required:
 - dnn
 - smfInstanceId
 - plmnId
 properties:
 dnn:
  $ref: 'TS29571_CommonData.yaml#/components/schemas/Dnn'
 smfInstanceId:
  $ref: 'TS29571_CommonData.yaml#/components/schemas/NfInstanceId'
 plmnId:
  $ref: 'TS29571_CommonData.yaml#/components/schemas/PlmnId'
  PgwInfo:
  type: object
  required:
 - dnn
 - pgwFqdn
 properties:
 dnn:
  $ref: 'TS29571_CommonData.yaml#/components/schemas/Dnn'
 pgwFqdn:
 type: string
 plmnId:
  $ref: 'TS29571_CommonData.yaml#/components/schemas/PlmnId'
  SessionManagementSubscriptionData:
  type: object
  required:
 - singleNssai
 properties:
 singleNssai:
  $ref: 'TS29571_CommonData.yaml#/components/schemas/Snssai'
 dnnConfigurations:
 description: A map (list of key-value pairs where Dnn serves as key) of DnnConfigurations
 type: object
 additionalProperties:
   $ref: '#/components/schemas/DnnConfiguration'
 internalGroupIds:
 type: array
 items:
   $ref: 'TS29571_CommonData.yaml#/components/schemas/GroupId'
  minItems: 1
 vnGroupInfo:
 type: object
 additionalProperties:
   $ref: '#/components/schemas/VnGroupData'
 sharedVnGroupDataId:
 type: object
 additionalProperties:
   $ref: '#/components/schemas/SharedDataId'
 sharedDnnConfigurationsId:
  $ref: '#/components/schemas/SharedDataId'
 odbPacketServices:
  $ref: 'TS29571_CommonData.yaml#/components/schemas/OdbPacketServices'
 traceData:
  $ref: 'TS29571_CommonData.yaml#/components/schemas/TraceData'
 sharedTraceDataId:
  $ref: '#/components/schemas/SharedDataId'
  DnnConfiguration:
  type: object
  required:
 - pduSessionTypes
 - sscModes
 properties:
 pduSessionTypes:
  $ref: '#/components/schemas/PduSessionTypes'
 sscModes:
  $ref: '#/components/schemas/SscModes'
 iwkEpsInd:
  $ref: '#/components/schemas/IwkEpsInd'
 5gQosProfile:
  $ref: 'TS29571_CommonData.yaml#/components/schemas/SubscribedDefaultQos'
 sessionAmbr:
  $ref: 'TS29571_CommonData.yaml#/components/schemas/Ambr'
 3gppChargingCharacteristics:
  $ref: '#/components/schemas/3GppChargingCharacteristics'
 staticIpAddress:
 type: array
 items:
   $ref: '#/components/schemas/IpAddress'
  minItems: 1
  maxItems: 2
 upSecurity:
  $ref: 'TS29571_CommonData.yaml#/components/schemas/UpSecurity'
 pduSessionContinuityInd:
  $ref: '#/components/schemas/PduSessionContinuityInd'
 invokeNefSelection:
 type: boolean
 niddnefld:
  $ref: 'TS29571_CommonData.yaml#/components/schemas/NfInstanceId'
 niddInfo:
  $ref: '#/components/schemas/NiddInformation'
  NiddInformation:
  type: object
  required:
 - afInstanceId
 properties:
 afInstanceId:
  $ref: 'TS29571_CommonData.yaml#/components/schemas/NfInstanceId'
 gpsi:
  $ref: 'TS29571_CommonData.yaml#/components/schemas/Gpsi'
  IpAddress:
  type: object
  oneOf:
 - required:
  - ipv4Addr
 - required:
  - ipv6Addr
 - required:
  - ipv6Prefix
  properties:
 ipv4Addr:
  $ref: 'TS29571_CommonData.yaml#/components/schemas/Ipv4Addr'
 ipv6Addr:
  $ref: 'TS29571_CommonData.yaml#/components/schemas/Ipv6Addr'
 ipv6Prefix:
  $ref: 'TS29571_CommonData.yaml#/components/schemas/Ipv6Prefix'
  PduSessionTypes:
  type: object
  required:
 - defaultSessionType
 properties:
 defaultSessionType:
  $ref: 'TS29571_CommonData.yaml#/components/schemas/PduSessionType'
 allowedSessionTypes:
 type: array
 items:
   $ref: 'TS29571_CommonData.yaml#/components/schemas/PduSessionType'
  minItems: 1
  SscModes:
  type: object
  required:
 - defaultSscMode
 properties:
 defaultSscMode:
  $ref: 'TS29571_CommonData.yaml#/components/schemas/SscMode'
 allowedSscModes:
 type: array
 items:
   $ref: 'TS29571_CommonData.yaml#/components/schemas/SscMode'
  minItems: 1
  maxItems: 2
  SmsSubscriptionData:
  type: object
  properties:
 smsSubscribed:
  $ref: '#/components/schemas/SmsSubscribed'
 sharedSmsSubsDataId:
  $ref: '#/components/schemas/SharedDataId'
  SmsManagementSubscriptionData:
  type: object
  properties:
 supportedFeatures:
  $ref: 'TS29571CommonData.yaml#/components/schemas/SupportedFeatures'
 mtSmsSubscribed:
 type: boolean
 mtSmsBarringAll:
 type: boolean
 mtSmsBarringRoaming:
 type: boolean
 moSmsSubscribed:
 type: boolean
 moSmsBarringAll:
 type: boolean
 moSmsBarringRoaming:
 type: boolean
 sharedSmsMngDataIds:
 type: array
 items:
   $ref: '#/components/schemas/SharedDataId'
  minItems: 1
 traceData:
  $ref: 'TS29571 CommonData.yaml#/components/schemas/TraceData'
  SdmSubscription:
  type: object
  required:
 - nfInstanceId
 - callbackReference
 - monitoredResourceUris
 properties:
 nfInstanceId:
  $ref: 'TS29571_CommonData.yaml#/components/schemas/NfInstanceId'
 implicitUnsubscribe:
 type: boolean
 expires:
  $ref: 'TS29571_CommonData.yaml#/components/schemas/DateTime'
 callbackReference:
  $ref: 'TS29571_CommonData.yaml#/components/schemas/Uri'
 amfServiceName:
  $ref: 'TS29510_Nnrf_NFManagement.yaml#/components/schemas/ServiceName'
 monitoredResourceUris:
 type: array
 items:
   $ref: 'TS29571_CommonData.yaml#/components/schemas/Uri'
  minItems: 1
 singleNssai:
  $ref: 'TS29571_CommonData.yaml#/components/schemas/Snssai'
 dnn:
  $ref: 'TS29571_CommonData.yaml#/components/schemas/Dnn'
 subscriptionId:
 type: string
 plmnId:
  $ref: 'TS29571_CommonData.yaml#/components/schemas/PlmnId'
  SdmSubsModification:
  type: object
  properties:
 expires:
  $ref: 'TS29571_CommonData.yaml#/components/schemas/DateTime'
 monitoredResourceUris:
 type: array
 items:
   $ref: 'TS29571_CommonData.yaml#/components/schemas/Uri'
  minItems: 1
  ModificationNotification:
  type: object
  required:
 - notifyItems
 properties:
 notify Items:
 type: array
 items:
   $ref: 'TS29571_CommonData.yaml#/components/schemas/NotifyItem'
  minItems: 1
  IdTranslationResult:
  type: object
  required:
 - supi
 properties:
 supportedFeatures:
  $ref: 'TS29571_CommonData.yaml#/components/schemas/SupportedFeatures'
 supi:
  $ref: 'TS29571_CommonData.yaml#/components/schemas/Supi'
 gpsi:
  $ref: 'TS29571_CommonData.yaml#/components/schemas/Gpsi'
  AcknowledgeInfo:
  type: object
  required:
 - provisioningTime
 properties:
 sorMacIue:
  $ref: 'TS29509_Nausf_SoRProtection.yaml#/components/schemas/SorMac'
 upuMaclue:
  $ref: 'TS29509_Nausf_UPUProtection.yaml#/components/schemas/UpuMac'
 securedPacket:
  $ref: '#/components/schemas/SecuredPacket'
 provisioningTime:
  $ref: 'TS29571_CommonData.yaml#/components/schemas/DateTime'
  SorInfo:
  type: object
  properties:
 steeringContainer:
  $ref: '#/components/schemas/SteeringContainer'
 ackInd:
  $ref: 'TS29509_Nausf_SoRProtection.yaml#/components/schemas/AckInd'
 sorMaclausf:
  $ref: 'TS29509_Nausf_SoRProtectionyaml#/components schemas/SorMac'
 countersor:
  $ref: 'TS29509_Nausf_SoRProtection.yaml#/components/schemas/CounterSor'
 provisioningTime:
  $ref: 'TS29571_CommonData.yaml#/components/schemas/DateTime'
  required:
 - ackInd
 - provisioningTime
 SharedDataIds:
 type: array
 items:
 $ref: '#/components/schemas/SharedDatald'
 minItems: 1
 uniqueItems: true
 UpuInfo:
 type: object
 properties:
 upuDataList:
 type: array
 items:
   $ref: 'TS29509_Nausf_UPUProtection.yaml#/components/schemas/UpuData'
  minItems: 1
 upuRegInd:
  $ref: '#/components/schemas/UpuReglnd'
 upuAckInd:
  $ref: 'TS29509_Nausf_UPUProtection.yaml#/components/schemas/UpuAckInd'
 upuMacIausf:
  $ref: 'TS29509_Nausf_UPUProtection.yaml#/components/schemas/UpuMac'
 counterUpu:
  $ref: 'TS29509_Nausf_UPUProtection.yaml#/components/schemas/CounterUpu'
 provisioningTime:
  $ref: 'TS29571_CommonData.yaml#/components/schemas/DateTime'
  required:
 - upuDataList
 - upuAckInd
 - upuRegInd
 - provisioningTime
 SharedData:
 type: object
 required:
 - sharedDataId
 properties:
 sharedDataId:
  $ref: '#/components/schemas/SharedDatald'
 sharedAmData:
  $ref: '#/components/schemas/AccessAndMobilitySubscriptionData'
 sharedSmsSubsData:
  $ref: '#/ components/schemas/SmsSubscriptionData'
 sharedSmsMngSubsData:
  $ref: '#/components/schemas/SmsManagementSubscriptionData'
 sharedDnnConfigurations:
 type: object
 additionalProperties:
   $ref: '#/components/schemas/DnnConfiguration'
 sharedTraceData:
  $ref: 'TS29571_CommonData.yaml#/components/schemas/TraceData'
 sharedSnssaiInfos:
 type: object
 additionalProperties:
   $ref: '#/components/schemas/SnssaiInfo'
   TraceDataResponse:
   type: object
   properties:
 traceData:
  $ref: 'TS29571_CommonData.yaml#/components/schemas/TraceData'
 sharedTraceDataId:
  $ref: '#/components/schemas/SharedDataId'
  SteeringContainer:
  oneOf:
 - type: array
 items:
   $ref: 'TS29509_Nausf_SoRProtection.yaml#/components/schemas/SteeringInfo'
  minItems: 1
 - $ref: '#/components/schemas/SecuredPacket'
 GroupIdentifiers:
 type: object
 properties:
 extGroupId:
  $ref: '#/components/schemas/ExtGroupId'
 intGroupId:
  $ref: 'TS29571_CommonData.yaml#/components/schemas/GroupId'
  VnGroupData:
  type: object
  properties:
 pduSessionTypes:
  $ref: '#/components/schemas/PduSessionTypes'
 dnn:
  $ref: '#/components/schemas/Dnn'
 singleNssai:
  $ref: '#/components/schemas/Snssai'
 appDescriptor:
   $ref: '#/components/schemas/AppDescriptor'
   AppDescriptor:
   type: object
   properties:
 osId:
 type: string
 osAppId:
 type: array
 items:
   type: string
   # SIMPLE TYPES:
   UeUsageType:
   type: integer
   MpsPriorityIndicator:
   type: boolean
   McsPriorityIndicator:
   type: boolean
   DnnIndicator:
   type: boolean
   LboRoamingAllowed:
   type: boolean
   SmsSubscribed:
   type: boolean
   3GppChargingCharacteristics:
   type: string
   DlPacketCount:
   type: integer
   minimum: -1
   MicoAllowed:
   type: boolean
   SharedDataId:
   type: string
   pattern: '^[0-9]{5,6}-.+$'
   IwkEpsInd:
   type: boolean
   SecuredPacket:
   type: string
   format: base64
   UpuRegInd:
   type: boolean
   ExtGroupId:
   type: string
   pattern: '^extgroupid-[^@]+@[^@]+$'
   # ENUMS:
   DataSetName:
   anyOf:
 - type: string
 enum:
  - AM
  - SMF SEL
  - UEC_SMF
  - UEC SMSF
  - SMS SUB
  - SM
  - TRACE
  - SMS_MNG
 - type: string
 PduSessionContinuityInd:
 anyOf:
 - type: string
 enum:
  - MAINTAIN _PDUSESSION
  - RECONNECT _PDUSESSION
  - RELEASE _PDUSESSION
 - type: string
```

## Claims

1. A method (500) performed by a first network node configured to provide data management functionality, preferably being a Unified Data Management, UDM, the method comprising:
receiving (502; 1010; 1110), from a second network node, a request for subscription data for a terminal device; and
transmitting (504; 1040; 1140), the subscription data, to the second network node,
wherein the subscription data comprises group data of at least one group to which the terminal device belongs;
**characterized in that** the method further comprises: prior to the transmitting of the subscription data comprising the group data, transmitting another subscription data comprising an identifier of the group data to the second network node.

2. The method according to claim 1, wherein the request comprises an indicator indicating a type of the subscription data, and the subscription data is obtained based on the indicator.

3. The method according to claim 2, wherein the request further comprises at least one of an identity of the terminal device and an identity of a Public Land Mobile Network, PLMN, that the terminal device is currently visiting.

4. The method (500) according to any one of claims 1 to 3, wherein the group data comprises at least one of the followings:
allowed session types;
accessible data network name;
network slice information; and
an application descriptor indicating an operating system and at least one application operating on the terminal device.

5. The method according to any one of claims 1 to 4, wherein the group data is indexed by a group identifier of the at least one group.

6. The method (500) according to any one of claims 1 to 5, further comprising:
transmitting (1020; 1120) a query for the subscription data to a third network node based on the request; and
receiving (1030; 1130) the subscription data from the third network node.

7. The method (500) according to claim 6, further comprising:
transmitting (506; 1050; 1150) an updated subscription data to the second network node based on a change of the group data.

8. The method according to claim 7, further comprising:
receiving the updated subscription data from the third network node.

9. The method (500) according to any one of claims 1-8, wherein the at least one group comprise a 5G virtual network group.

10. The method (500) according to any one of claims 6-9, wherein the third network node is a unified data repository.

11. The method (500) according to any one of claims 1-10, wherein the first network node is a unified data management, the second network node is one of an access and mobility management function and a session management function.

12. An apparatus (1400) in a first network node configured to provide data management functionality, preferably being a Unified Data Management, UDM, the apparatus comprising:
one or more processors (1401); and
one or more memories (1402) comprising computer program codes (1404) which, when executed by the one or more processors (1401), cause the first network node to:
receive, from a second network node, a request for subscription data for a terminal device; and
transmit the subscription data to the second network node,
wherein the subscription data comprises group data of at least one group to which the terminal device belongs;
**characterized in that** the computer program codes (1404), when executed by the one or more processors (1401), further cause the first network node to: prior to the transmission of the subscription data comprising the group data, transmit another subscription data comprising an identifier of the group data to the second network node.

13. The apparatus (1400) according to claim 12, wherein the computer program codes (1404), when executed by the one or more processors (1401), further cause the first network node to perform the method according to any one of claims 2-11.

14. A computer-readable medium having computer program codes embodied thereon which, when executed on a computer in a first network node configured to provide data management functionality, preferably being a Unified Data Management, UDM, cause the first network node to perform the method according to any one of claims 1-11.

## Patentansprüche

1. Verfahren (500), das von einem ersten Netzwerkknoten durchgeführt wird, der dazu konfiguriert ist, Datenverwaltungsfunktionen bereitzustellen, vorzugsweise ein Unified Data Management, UDM, wobei das Verfahren umfasst:
Empfangen (502; 1010; 1110) einer Anforderung für Abonnementdaten für ein Endgerät von einem zweiten Netzwerkknoten; und
Übermitteln (504; 1040; 1140) der Abonnementdaten an den zweiten Netzwerkknoten,
wobei die Abonnementdaten Gruppendaten mindestens einer Gruppe umfassen, zu der das Endgerät gehört;
**dadurch gekennzeichnet, dass** das Verfahren ferner umfasst: vor dem Übermitteln der Abonnementdaten, die die Gruppendaten umfassen, Übermitteln weiterer Abonnementdaten, die eine Kennung der Gruppendaten umfassen, an den zweiten Netzwerkknoten.

2. Verfahren nach Anspruch 1, wobei die Anforderung einen Indikator umfasst, der einen Typ der Abonnementdaten angibt, und die Abonnementdaten basierend auf dem Indikator erhalten werden.

3. Verfahren nach Anspruch 2, wobei die Anforderung ferner mindestens eines aus einer Kennung des Endgerätes und einer Kennung eines öffentlichen terrestrischen Mobilfunknetzes, PLMN, umfasst, das das Endgerät derzeit besucht.

4. Verfahren (500) nach einem der Ansprüche 1 bis 3, wobei die Gruppendaten mindestens eines des Folgenden umfassen:
zulässige Sitzungstypen;
einen zugänglichen Datennetzwerknamen;
Netzwerk-Slice-Informationen; und
einen Anwendungsdeskriptor, der ein Betriebssystem und mindestens eine Anwendung anzeigt, die auf dem Endgerät ausgeführt wird.

5. Verfahren nach einem der Ansprüche 1 bis 4, wobei die Gruppendaten durch eine Gruppenkennung der mindestens einen Gruppe indexiert werden.

6. Verfahren (500) nach einem der Ansprüche 1 bis 5, ferner umfassend:
Übermitteln (1020; 1120) einer Abfrage für die Abonnementdaten an einen dritten Netzwerkknoten basierend auf der Anforderung; und
Empfangen (1030; 1130) der Abonnementdaten vom dritten Netzwerkknoten.

7. Verfahren (500) nach Anspruch 6, ferner umfassend:
Übermitteln (506; 1050; 1150) von aktualisierten Abonnementdaten an den zweiten Netzwerkknoten basierend auf einer Veränderung der Gruppendaten.

8. Verfahren nach Anspruch 7, ferner umfassend:
Empfangen der aktualisierten Abonnementdaten vom dritten Netzwerkknoten.

9. Verfahren (500) nach einem der Ansprüche 1 bis 8, wobei die mindestens eine Gruppe eine virtuelle 5G-Netzwerkgruppe umfasst.

10. Verfahren (500) nach einem der Ansprüche 6 bis 9, wobei der dritte Netzwerkknoten ein Unified Data Repository ist.

11. Verfahren (500) nach einem der Ansprüche 1 bis 10, wobei der erste Netzwerkknoten ein Unified Data Management ist, der zweite Netzwerkknoten eines von einer Zugangs- und Mobilitätsverwaltungsfunktion und einer Sitzungsverwaltungsfunktion ist.

12. Einrichtung (1400) in einem ersten Netzwerkknoten, der dazu konfiguriert ist, Datenverwaltungsfunktionen bereitzustellen, vorzugsweise ein Unified Data Management, UDM, wobei die Einrichtung umfasst:
einen oder mehrere Prozessoren (1401); und
einen oder mehrere Speicher (1402), die Computerprogrammcodes (1404) umfassen, die, wenn sie von dem einen oder den mehreren Prozessoren (1401) ausgeführt werden, den ersten Netzwerkknoten dazu veranlassen:
Empfangen einer Anforderung für Abonnementdaten für ein Endgerät von einem zweiten Netzwerkknoten; und
Übermitteln der Abonnementdaten an den zweiten Netzwerkknoten, wobei die Abonnementdaten Gruppendaten mindestens einer Gruppe umfassen, zu der das Endgerät gehört;
**dadurch gekennzeichnet, dass** die Computerprogrammcodes (1404), wenn sie von dem einen oder den mehreren Prozessoren (1401) ausgeführt werden, ferner den ersten Netzwerkknoten dazu veranlassen: vor dem Übermitteln der Abonnementdaten, die die Gruppendaten umfassen, Übermitteln weiterer Abonnementdaten, die eine Kennung der Gruppendaten umfassen, an den zweiten Netzwerkknoten.

13. Einrichtung (1400) nach Anspruch 12, wobei die Computerprogrammcodes (1404), wenn sie von dem einen oder den mehreren Prozessoren (1401) ausgeführt werden, ferner den ersten Netzwerkknoten dazu veranlassen, das Verfahren nach einem der Ansprüche 2 bis 11 durchzuführen.

14. Computerlesbares Medium, auf dem Computerprogrammcodes enthalten sind, die, wenn sie auf einem Computer in einem ersten Netzwerkknoten ausgeführt werden, der zur Bereitstellung von Datenverwaltungsfunktionen konfiguriert ist, vorzugsweise ein Unified Data Management, UDM, den ersten Netzwerkknoten dazu veranlassen, das Verfahren nach einem der Ansprüche 1 bis 11 durchzuführen.

## Revendications

1. Procédé (500) mis en œuvre par un premier nœud de réseau configuré pour assurer une fonctionnalité de gestion de données, de préférence une fonction de gestion unifiée des données, UDM, le procédé comprenant :
la réception (502 ; 1010 ; 1110), en provenance d'un second nœud de réseau, d'une demande de données d'abonnement pour un dispositif terminal ;
la transmission (504 ; 1040 ; 1140) des données d'abonnement au second nœud de réseau,
dans lequel les données d'abonnement comprennent des données de groupe d'au moins un groupe auquel appartient le dispositif terminal ;
**caractérisé en ce que** le procédé comprend en outre : avant la transmission des données d'abonnement comprenant les données de groupe, la transmission d'autres données d'abonnement comprenant un identifiant des données de groupe au second nœud de réseau.

2. Procédé selon la revendication 1, dans lequel la demande comprend un indicateur indiquant un type des données d'abonnement, et les données d'abonnement sont obtenues sur la base de l'indicateur.

3. Procédé selon la revendication 2, dans lequel la demande comprend en outre au moins l'une parmi une identité du dispositif terminal et une identité d'un réseau mobile terrestre public, PLMN, que le dispositif terminal visite actuellement.

4. Procédé (500) selon l'une quelconque des revendications 1 à 3, dans lequel les données de groupe comprennent au moins l'un des éléments suivants :
des types de sessions autorisés ;
un nom de réseau de données accessible ;
des informations de découpage de réseau ; et
un descripteur d'application indiquant un système d'exploitation et au moins une application s'exécutant sur le dispositif terminal.

5. Procédé selon l'une quelconque des revendications 1 à 4, dans lequel les données de groupe sont indexées par un identifiant de groupe dudit au moins un groupe.

6. Procédé (500) selon l'une quelconque des revendications 1 à 5, comprenant en outre :
la transmission (1020 ; 1120), à un troisième nœud de réseau, d'une interrogation concernant les données d'abonnement sur la base de la demande ; et
la réception (1030 ; 1130) des données d'abonnement en provenance du troisième nœud de réseau.

7. Procédé (500) selon la revendication 6, comprenant en outre :
la transmission (506 ; 1050 ; 1150) de données d'abonnement mises à jour au second nœud de réseau sur la base d'un changement des données de groupe.

8. Procédé selon la revendication 7, comprenant en outre :
la réception des données d'abonnement mises à jour en provenance du troisième nœud de réseau.

9. Procédé (500) selon l'une quelconque des revendications 1 à 8, dans lequel ledit au moins un groupe comprend un groupe de réseau virtuel 5G.

10. Procédé (500) selon l'une quelconque des revendications 6 à 9, dans lequel le troisième nœud de réseau est un référentiel de données unifié, UDR.

11. Procédé (500) selon l'une quelconque des revendications 1 à 10, dans lequel le premier nœud de réseau est une fonction de gestion unifiée des données, le second nœud de réseau est l'une parmi une fonction de gestion de l'accès et de la mobilité et une fonction de gestion de session.

12. Appareil (1400) dans un premier nœud de réseau configuré pour assurer une fonctionnalité de gestion de données, de préférence une fonction de gestion unifiée des données, UDM, l'appareil comprenant :
un ou plusieurs processeurs (1401) ; et
une ou plusieurs mémoires (1402) comprenant des codes de programme informatique (1404) qui, lorsqu'ils sont exécutés par les un ou plusieurs processeurs (1401), amènent le premier nœud de réseau à :
recevoir, en provenance d'un second nœud de réseau, une demande de données d'abonnement pour un dispositif terminal ; et
transmettre les données d'abonnement au second nœud de réseau, dans lequel les données d'abonnement comprennent des données de groupe d'au moins un groupe auquel appartient le dispositif terminal ;
**caractérisé en ce que** les codes de programme informatique (1404), lorsqu'ils sont exécutés par les un ou plusieurs processeurs (1401), amènent en outre le premier nœud de réseau à : avant la transmission des données d'abonnement comprenant les données de groupe, transmettre d'autres données d'abonnement comprenant un identifiant des données de groupe au second nœud de réseau.

13. Appareil (1400) selon la revendication 12, dans lequel les codes de programme informatique (1404), lorsqu'ils sont exécutés par les un ou plusieurs processeurs (1401), amènent en outre le premier nœud de réseau à réaliser le procédé selon l'une quelconque des revendications 2 à 11.

14. Support lisible par ordinateur sur lequel sont incorporés des codes de programme informatique qui, lorsqu'ils sont exécutés sur un ordinateur dans un premier nœud de réseau configuré pour assurer une fonctionnalité de gestion de données, de préférence une fonction de gestion unifiée des données, UDM, amènent le premier nœud de réseau à réaliser le procédé selon l'une quelconque des revendications 1 à 11.
